(19) **Europäisches Patentamt / European Patent Office / Office européen des brevets**

(11) **EP 3 824 280 B1**

(12) **FASCICULE DE BREVET EUROPEEN**

(45) Date de publication et mention de la délivrance du brevet:
**03.08.2022 Bulletin 2022/31**

(21) Numéro de dépôt: **19745574.4**

(22) Date de dépôt: **16.07.2019**

(51) Classification Internationale des Brevets (IPC):
**G01N 29/06** (2006.01)   **G01N 29/44** (2006.01)

(52) Classification Coopérative des Brevets (CPC):
**G01N 29/0654; G01N 29/0672; G01N 29/4463;**
G01N 2291/02475

(86) Numéro de dépôt international:
**PCT/EP2019/069160**

(87) Numéro de publication internationale:
**WO 2020/016250 (23.01.2020 Gazette 2020/04)**

(54) **PROCÉDÉS ET SYSTÈMES DE CARACTÉRISATION ULTRASONORE NON INVASIVE D'UN MILIEU HÉTÉROGÈNE**

VERFAHREN UND SYSTEME ZUR NICHTINVASIVEN CHARAKTERISIERUNG EINES HETEROGENEN MEDIUMS MITTELS ULTRASCHALL

METHODS AND SYSTEMS FOR NON-INVASIVELY CHARACTERISING A HETEROGENEOUS MEDIUM USING ULTRASOUND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2018 FR 1856720**

(43) Date de publication de la demande:
**26.05.2021 Bulletin 2021/21**

(73) Titulaires:
- **Centre national de la recherche scientifique**
  **75016 Paris (FR)**
- **Ecole Supérieure de Physique et de Chimie Industrielles de la Ville de Paris**
  **75005 Paris (FR)**

(72) Inventeurs:
- **AUBRY, Alexandre**
  **94200 Ivry-sur-Seine (FR)**
- **BADON, Amaury**
  **BROOKLINE, Massachusetts 02446 (US)**
- **BAROLLE, Victor**
  **92210 Saint Cloud (FR)**
- **BOCCARA, Claude**
  **75006 Paris (FR)**
- **COBUS, Laura**
  **75020 Paris (FR)**
- **FINK, Mathias**
  **92190 Meudon (FR)**
- **LAMBERT, William**
  **75005 Paris (FR)**

(74) Mandataire: **Osha Liang**
  **2, rue de la Paix**
  **75002 Paris (FR)**

(56) Documents cités:
- **JEAN-LUC ROBERT ET AL: "Green's function estimation in speckle using the decomposition of the time reversal operator: Application to aberration correction in medical imaging", THE JOURNAL OF THE ACOUSTICAL SOCIETY OF AMERICA, vol. 123, no. 2, 1 février 2008 (2008-02-01), pages 866-877, XP055569717, New York, NY, US ISSN: 0001-4966, DOI: 10.1121/1.2816562 cité dans la demande**
- **MONTALDO G ET AL: "Coherent plane-wave compounding for very high frame rate ultrasonography and transient elastography", IEEE TRANSACTIONS ON ULTRASONICS, FERROELECTRICS AND FREQUENCY CONTROL, IEEE, US, vol. 56, no. 3, 1 mars 2009 (2009-03-01), pages 489-506, XP011255897, ISSN: 0885-3010 cité dans la demande**

**Description**

DOMAINE TECHNIQUE

La présente description concerne des procédés et systèmes de caractérisation ultrasonore non invasive d'un milieu hétérogène, et s'applique notamment à l'imagerie médicale ou au contrôle non destructif et plus généralement à tous les domaines dans lesquels l'imagerie ultrasonore peut être utilisée.

ETAT DE L'ART

Dans le domaine de l'imagerie acoustique, on cherche à caractériser un milieu inconnu en le sondant de manière active avec des ondes ultrasonores. C'est notamment le principe de l'échographe en imagerie médicale.

La résolution d'un système d'imagerie acoustique peut être définie comme la capacité à discerner les petits détails d'un objet. En principe, un système d'imagerie acoustique est limité par la diffraction et la résolution théorique est donnée par $\lambda / 2$ (où $\lambda$ est la longueur d'onde du son dans le milieu), ou par l'ouverture angulaire finie du détecteur. En pratique, la résolution est cependant souvent détériorée par les variations de vitesses du son dans le milieu de propagation.

En effet, la plupart du temps en imagerie acoustique, le milieu est considéré comme homogène, avec une vitesse du son co constante. Or l'hypothèse d'un milieu homogène n'est pas toujours respectée. Par exemple, dans le cas de l'échographie du foie, la sonde est placée entre les côtes du patient. Les ondes acoustiques traversent une succession de couches de graisse et de muscle avant d'atteindre l'organe visé. Les tissus mous possèdent des propriétés mécaniques différentes. La vitesse du son est donc loin d'être homogène, entre 1450 m/s pour les tissus adipeux et 1600 m/s pour le foie. Les variations de vitesse du son entraînent un déphasage différent des ondes suivant les endroits par lesquels elles se propagent. Il en résulte une *aberration* du front d'onde acoustique qui conduit à une distorsion de l'image échographique résultante, et donc à une dégradation de sa résolution et de son contraste. Ces aberrations peuvent être telles qu'elles compromettent l'examen médical.

Au cours des dernières décennies, différentes méthodes ont été développées pour corriger les aberrations, principalement dans le domaine de l'imagerie médicale, afin d'obtenir une image échographique ayant une résolution optimale lorsque celle-ci est dégradée par les hétérogénéités du milieu. Toutefois, dans le cas d'aberrations complexes, les distorsions du front d'onde varient suivant les zones de l'image. Qualifiées de domaines d'isoplanétisme, ces zones sont souvent impossibles à déterminer a priori et constituent de ce fait une limite fondamentale pour l'application des techniques de l'état de l'art.

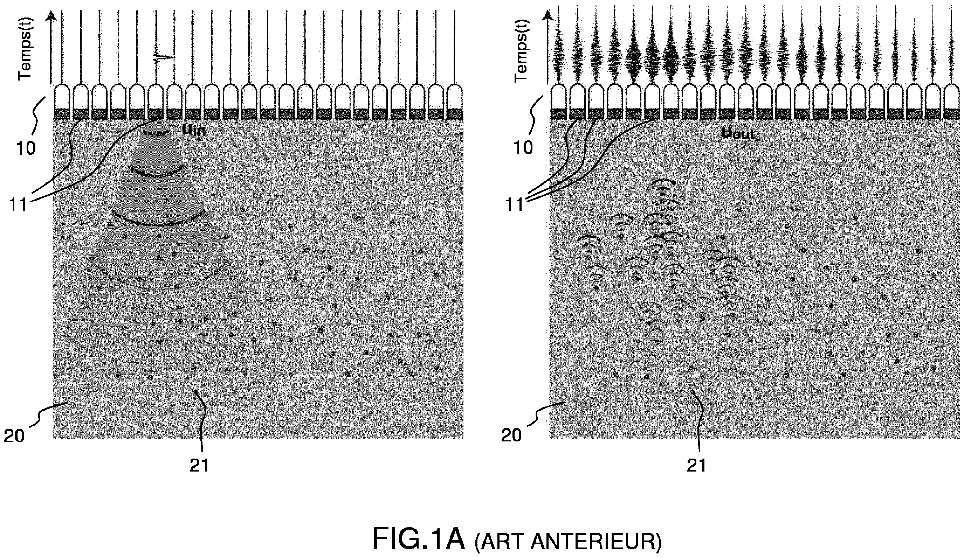

Comme illustré sur les FIGS 1A - 1C, les méthodes d'échographie conventionnelle utilisent un réseau 10 de transducteurs piézo-électriques 11 qui peuvent émettre et recevoir des impulsions ultrasonores de manière indépendante. On repère la position de chacun des transducteurs par le vecteur u. Lorsqu'un tel réseau est placé en vis-à-vis d'un milieu 20 que l'on cherche à étudier, celui-ci peut être insonifié de différentes manières.

La première manière pour insonifier le milieu à étudier est d'émettre une impulsion ultrasonore depuis un des transducteurs du réseau dont la position est repérée par $\mathbf{u_{in}}$ (FIG. 1A, schéma de gauche). Cela donne lieu à une onde incidente cylindrique (ou sphérique) divergente pour un réseau 1D (ou 2D) de transducteurs. Celle-ci est réfléchie par les diffuseurs 21 du milieu 20 et le champ rétrodiffusé est enregistré par chacun des transducteurs 11 en fonction du temps (FIG. 1A, schéma de droite). En répétant cette opération avec chaque transducteur utilisé successivement comme source, on mesure l'ensemble des réponses impulsionnelles $R(\mathbf{u_{out}}, \mathbf{u_{in}}, t)$ entre chaque transducteur, où $\mathbf{u_{out}}$ désigne la position du détecteur. Ces réponses forment la matrice de réflexion $\mathbf{R_{uu}}(t)$ exprimée dans la base des transducteurs. L'intérêt d'une telle mesure réside dans le fait que cette matrice contient toute l'information sur le milieu étudié, un ensemble d'opérations matricielles pouvant ensuite lui être appliquées à des fins d'imagerie du milieu, par exemple. En revanche, une telle acquisition suppose que le milieu reste fixe pendant toute la durée des mesures, ce qui peut être très limitant dans le cas d'expérience in-vivo. De plus, l'énergie émise par un seul élément piézo-électrique est faible, ce qui peut induire un mauvais rapport signal à bruit.

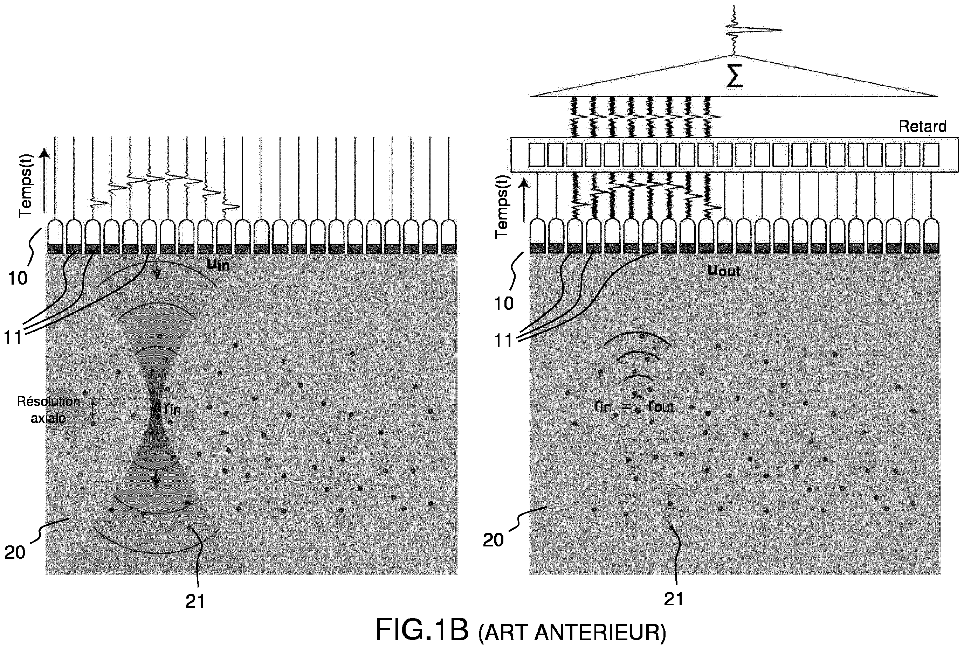

D'autres manières sont connues pour insonifier le milieu à étudier qu'on connaît sous le nom de « formation de voies » (ou « beamforming » en anglais), ces techniques désignant le contrôle cohérent d'ondes par application de lignes à retard. Parmi ces techniques, on connaît les émissions focalisées, technique largement utilisée par les échographes conventionnels. Comme montré par la FIG. 1B (schéma de gauche), il suffit d'appliquer aux transducteurs 11 un jeu de retards appropriés afin de corriger les temps de parcours pour que toutes les impulsions arrivent ensemble au point focal $\mathbf{r_{in}}$ visé. En raison des limites physiques de la diffraction, on concentre les ultrasons dans une zone délimitée par l'ouverture de la sonde échographique. Notons que dans un échographe, la focalisation se fait également à la réception. L'ensemble des échos captés par les éléments 11 du réseau 10 est alors traité pour simuler l'effet d'une lentille en réception, comme décrit sur la Fig. 1B, schéma de droite. Les signaux reçus par les transducteurs sont remis en phase en les décalant temporellement. Ces délais sont identiques à ceux appliqués à l'émission. Dans la phase d'émission, tous les signaux interfèrent au point $r_{in}$. En réception, les signaux provenant de ce même point $r_{out} = r_{in}$ interfèrent électroniquement par sommation des signaux au temps balistique t = 2‖$u_{out}$ - $r_{in}$‖/c. Cette sommation donne le résultat final de la focalisation en réception. La méthode illustrée sur la FIG.1B, dite méthode confocale à double focalisation à l'émission et à la réception permet d'imager directement la réflectivité du milieu avec une résolution latérale limitée par la diffraction, une excellente résolution axiale seulement limitée par la durée de l'impulsion initiale et un excellent contraste. Toutefois, cette méthode est chronophage car il faut en toute théorie focaliser à l'émission en chacun des points du milieu.

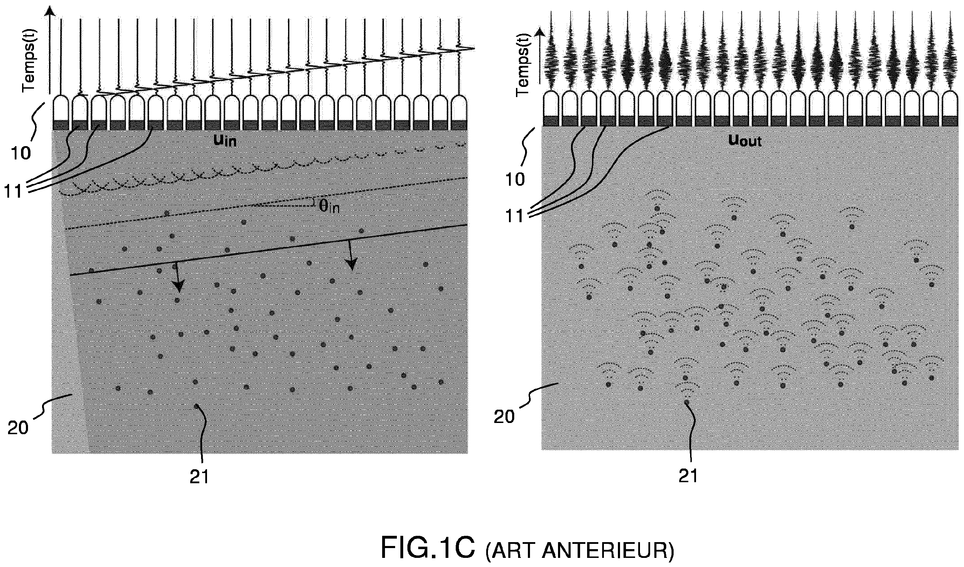

Une autre technique de formation de voies, développée plus récemment, consiste à insonifier le milieu avec une série d'ondes planes. La FIG. 1C illustre le principe de cette échographie dite en ondes planes, décrite par exemple dans l'article de G. Montaldo et al. « Coherent plane-wave compounding for very high frame rate ultrasonography and transient elastography" (IEEE Trans. Ultrason., Ferroelect. Freq. Control 56 489-506, 2009). Des retards sont appliqués sur chaque signal à l'émission (FIG. 1C, schéma de gauche) pour la formation d'un front d'onde incliné d'un angle $\theta_{in}$ par rapport au réseau de transducteurs 10. A la réception (FIG. 1C, schéma de droite), le champ rétrodiffusé par le milieu, $R(u_{out}, \theta_{in}, t)$ est mesuré par tous les capteurs $u_{out}$ pour une série d'ondes planes incidentes dont on fait varier l'angle d'incidence $\theta_{in}$. L'ensemble de ces réponses forment une matrice de réflexion $R_{u\theta}(t)$ définie entre la base de Fourier (ou base d'ondes planes) en entrée et la base des transducteurs en sortie. Une fois cette matrice enregistrée, les signaux sont décalés temporellement avant d'être sommés de manière cohérente afin de focaliser numériquement les données à l'émission et à la réception pour chaque point $r_{in}$ de l'image échographique. Le nombre d'acquisitions nécessaires pour former une image échographique est réduit par rapport à l'échographie standard (émissions focalisées), et ceci pour un même niveau de contraste et de résolution de l'image échographique.

Inspirées des techniques de correction des aberrations optiques utilisées en astronomie dans les années 1950, des techniques de focalisation adaptative ont été introduites pour corriger la distorsion de phase en imagerie ultrasonore (voir par exemple D. J. Philips, S. W. Smith, O. T. Von Ramm et F. L. Thurstone, 'A phase compensation technique for B-Mode echoencephalography'. Ultrasound in Medicine, 1, 345-404, 1975).

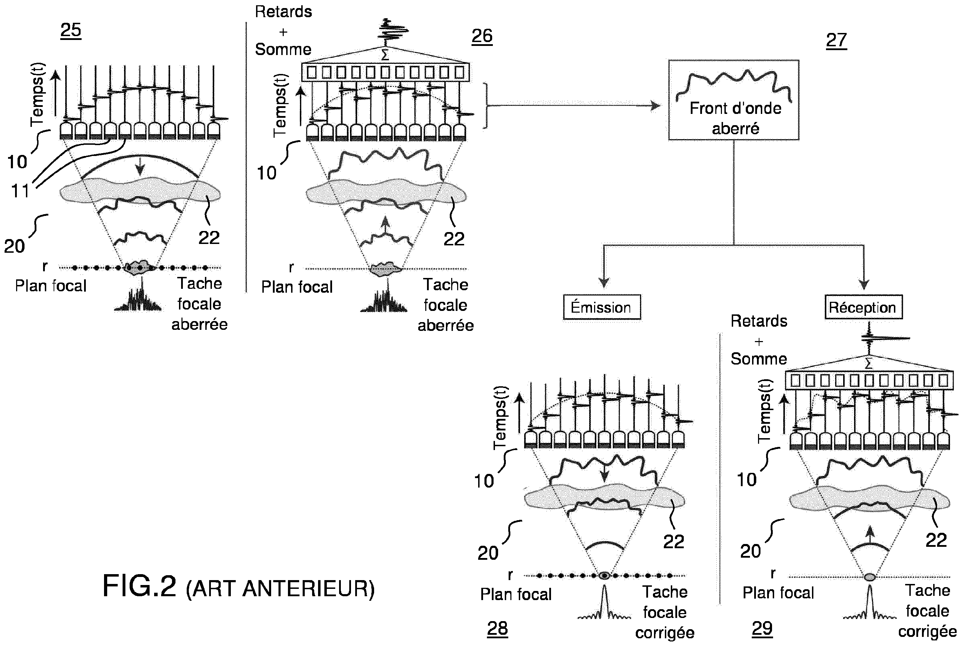

Comme illustré sur la FIG. 2, cette technique de correction s'applique à toutes les méthodes d'imagerie échographique conventionnelle (FIGS 1A-1C). Cette technique suppose une couche aberratrice 22 fine et qui induit de simples décalages temporels sur les transducteurs 11. Ces derniers peuvent alors être compensés en ajoutant une loi de retard supplémentaire aux délais généralement utilisés en formation de voies. Comme illustré schématiquement sur la FIG. 2, cette technique de correction comprend l'excitation (25) du milieu 20 sans prise en compte des aberrations, l'estimation (26 - 27) de la loi d'aberration et la nouvelle émission/réception (28 - 29) en prenant en compte l'aberrateur. En utilisant une boucle de rétroaction entre l'émetteur et le détecteur, le système est itéré en temps réel afin de trouver les décalages temporels optimaux pour corriger l'aberration. Plusieurs approches ont été proposées pour calculer les retards à appliquer sur chacun des transducteurs du réseau à partir du speckle ultrasonore, c'est-à-dire le signal résultant de la réflexion des ultrasons par une répartition aléatoire de diffuseurs sous-résolus. Une méthode est basée sur des corrélations entre les signaux reçus par des transducteurs voisins (voir par exemple M. O'Donnell et S. W. Flax. « Phase aberration measurements in medical ultrasound: Human studies », Ultrasonic Imaging 10, 1-11, 1988). Une autre méthode est basée sur l'optimisation de contraste du speckle ultrasonore (L. Nock, G. E. Trahey et S. W. Smith. « Phase aberration correction in médical ultrasound using speckle brightness as a quality factor », J. Acoust. Soc. Am, Vol. 85, 5, pp 1819-1833, 1989). Cependant, ces techniques de correction reposent sur l'hypothèse d'une mince couche aberratrice 22 qui se situe au plus près du réseau de transducteurs 10. Pour un aberrateur volumique, ces méthodes ne sont donc valables que sur un seul domaine d'isoplanétisme.

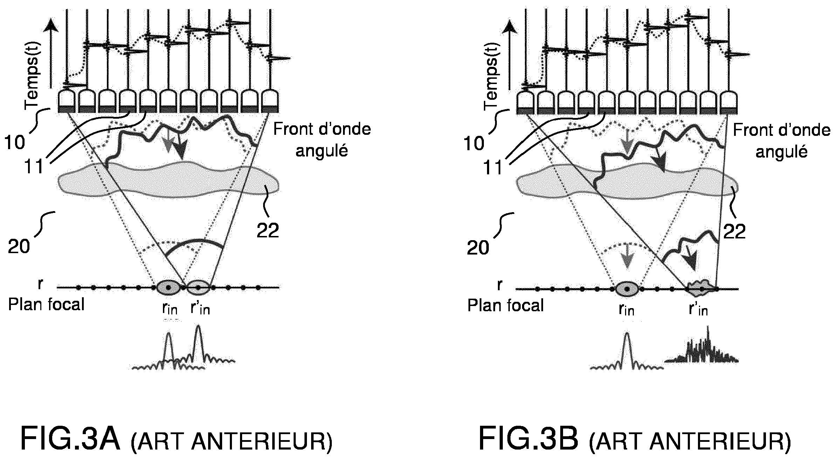

La notion de domaines d'isoplanétisme est illustré sur les FIGS. 3A - 3B. Un aberrateur 22 est présent entre le réseau de transducteurs 10 et le plan focal. Dans l'exemple de la FIG. 3A, des retards sont appliqués aux transducteurs 11 du réseau de transducteurs 10 de telle sorte que le front de l'onde acoustique en sortie de l'aberrateur 22 soit corrigé (onde cylindrique). Il en résulte en un point $r_{in}$ donné du plan focal une tache focale limitée par diffraction. Si ce même front d'onde corrigé est légèrement angulé (FIG. 3A) (ou translaté) pour permettre une focalisation en un point $r'_{in}$ tel que | $r_{in}$ - $r'_{in}$ | < $l_c$, où $l_c$ est un paramètre caractéristique de l'aberrateur, appelée longueur de cohérence de l'aberrateur, alors le front d'onde issu de l'aberrateur reste corrigé et la focalisation est toujours limitée par la diffraction en $r'_{in}$. Les points $r_{in}$ et $r'_{in}$ appartiennent aux mêmes domaines d'isoplanétisme de la zone insonifiée. Par contre, si le front d'onde incident corrigé est angulé davantage (FIG. 3B) pour permettre une focalisation en un point $r'_{in}$ tel que | $r_{in}$ - $r'_{in}$ | > $l_c$, alors le front d'onde issu de l'aberrateur est distordu et la correction appliquée ne permet pas une focalisation limitée par la diffraction en $r'_{in}$. Les points $r_{in}$ et $r'_{in}$ appartiennent dans ce cas à des domaines d'isoplanétisme différents de la zone insonifiée.

Au-delà d'un champ de correction limité à un seul domaine d'isoplanétisme, les techniques de correction d'aberration mentionnées précédemment ne fonctionnent pas en général pour des signaux ultra large bande (tels que ceux utilisés en imagerie ultrasonore), puisque chaque composante spectrale du champ ondulatoire peut subir une distorsion de phase différente. Pour une correction ultra large bande des aberrations en imagerie ultrasonore, des méthodes plus sophistiquées ont été développées, telles que les méthodes de filtrage inverse ou adapté dérivées du concept de retournement temporel. Elles consistent à convoluer les signaux émis et reçus par des filtres spatio-temporels adaptés permettant d'optimiser la focalisation des ondes dans le milieu et de corriger les aberrations de celui-ci. Toutefois, la connaissance de ce filtre nécessite la présence d'un fort diffuseur (C. Prada and M. Fink, « Eigenmodes of the time reversai operator », Wave Motion, 20, 151-163, 1994) ou d'un réseau de détecteurs au sein du milieu que l'on cherche à imager ce qui s'avère être particulièrement invasif (voir par exemple M. Tanter, J.-L. Thomas and M. Fink. « Time reversai and the inverse filter », J. Acoust. Soc. Am. 108, 223-234, 2000).

Une approche plus récente tire bénéfice directement de la matrice de réflexion et sa matrice de corrélation pour corriger les aberrations de manière itérative dans le speckle ultrasonore. Ainsi, dans l'article de J-L. Robert et al. (« Green's function estimation in speckle using the décomposition of the time reversal operator: Application to aberration correction in medical imaging », J. Acoust. Soc. Am., 123, 2 (2008)), il s'agit de mesurer la matrice de réflexion $\mathbf{R_{ur}}$ entre une base d'émissions focalisée à l'entrée et la base des transducteurs en sortie. L'ensemble des émissions focalisées en des points $\mathbf{r_{in}}$ du milieu peut être vu comme un réseau de transducteurs virtuels placés au sein de ce dernier, leur taille respective étant donnée par chaque tâche focale. Ainsi cette matrice de réflexion contient l'ensemble des réponses impulsionnelles R ($\mathbf{u_{out}}$, $\mathbf{r_{in}}$, t) entre chaque transducteur d'un réseau virtuel ($\mathbf{r_{in}}$) au sein du milieu étudié et chaque transducteur ($\mathbf{u_{out}}$) du réseau réel. En limitant la taille du réseau virtuel à un domaine d'isoplanétisme, il a été montré que le premier vecteur propre de la matrice de corrélation $\mathbf{R_{ur}R_{ur}^{\dagger}}$, où $\mathbf{R_{ur}^{\dagger}}$ est la matrice transconjuguée (ou matrice transposée de la matrice conjuguée) de $\mathbf{R_{ur}}$, donne le front d'onde permettant de focaliser sur un diffuseur virtuel (étoile artificielle) dont la taille est donnée par la tâche focale initiale. En angulant ce front d'onde, on peut focaliser en chacun des points du domaine d'isoplanétisme. On peut alors réitérer le processus avec cette nouvelle base d'émissions focalisées, reconstruire une nouvelle matrice de réflexion $\mathbf{R_{ur}}$ et accéder à une loi de correction des aberrations plus précise etc. L'un des inconvénients de cette approche est la nécessité d'itérer le processus, ce qui réduit singulièrement la cadence d'image. Par ailleurs, comme les autres techniques de l'état de l'art, le champ de correction de l'image est, encore une fois, limité à un seul domaine d'isoplanétisme.

Dans le cadre de la présente description, une méthode originale est proposée qui ne repose ni sur la génération d'une étoile artificielle, ni sur une approche itérative. La méthode proposée permet en outre de corriger simultanément les aberrations dans les différents domaines d'isoplanétisme d'une image de speckle, pouvant contenir également des objets plus déterministes (interfaces, gros diffuseurs, etc.) qui donnent lieu à une réflexion spéculaire de l'onde incidente.

RESUME

La présente description a pour objet, selon un premier aspect, un procédé de caractérisation ultrasonore non invasive d'un milieu hétérogène, le procédé comprenant :

- une étape de génération, au moyen d'au moins un premier réseau de transducteurs, d'une série d'ondes ultrasonores incidentes dans une zone dudit milieu hétérogène ;
- une étape d'enregistrement d'une matrice de réflexion expérimentale définie entre une base d'émission en entrée et la base des transducteurs en sortie ;
- une étape de détermination, à partir de ladite matrice de réflexion expérimentale, d'au moins une première matrice de réflexion large bande, définie dans une base de focalisation en entrée et en sortie, dans une première bande spectrale ;
- une étape de détermination d'une première matrice distorsion définie dans ladite première bande spectrale, entre ladite base de focalisation et une base d'observation, ladite première matrice distorsion résultant, directement ou après changement de base, du produit matriciel terme à terme de ladite première matrice de réflexion large bande définie entre ladite base de focalisation et une base de correction des aberrations, avec la matrice conjuguée en phase d'une matrice de réflexion de référence, définie pour un milieu modèle, entre les mêmes bases;
- une étape de détermination à partir de ladite première matrice distorsion, d'au moins une cartographie d'un paramètre physique de ladite zone insonifiée dudit milieu hétérogène.

Comme cela sera décrit plus en détails dans la suite de la description, un paramètre physique du milieu hétérogène peut comprendre par exemple : une loi d'aberrations associée à au moins un domaine d'isoplanétisme contenu dans la zone insonifiée, un paramètre caractéristique de la réflectivité locale du milieu, un paramètre caractéristique de la vitesse du son dans le milieu, un taux de diffusion multiple.

Un milieu hétérogène au sens de la présente description comprend tout milieu comprenant des diffuseurs présentant une rupture d'impédance acoustique par rapport à celle d'un milieu environnant, le dit milieu environnant pouvant également présenter une vitesse du son spatialement inhomogène (e.g milieu multicouches). Les procédés et systèmes décrits dans la présente description permettent notamment une caractérisation ultrasonore non invasive en profondeur d'un tel milieu hétérogène.

Les aberrations d'un front d'onde ultrasonore se propageant à travers un milieu hétérogène correspondent à l'écart entre le front d'onde issu de ce milieu et celui qui serait attendu dans un cas idéal. Ces aberrations peuvent être liées par exemple aux fluctuations spatiales de la vitesse du son dans le milieu. Par exemple, dans le cas de l'échographie, les ondes acoustiques traversent différents types de tissus avant d'atteindre l'organe visé. Les tissus mous présentent des propriétés mécaniques différentes, la vitesse du son est donc loin d'être homogène. Il en résulte une *aberration* du front d'onde acoustique qui conduit à une distorsion de l'image échographique résultante, et donc à une dégradation de sa résolution et de son contraste. Ces aberrations peuvent être telles qu'elles compromettent l'examen médical.

Une base de correction des aberrations optimale est une base qui maximise la taille des domaines d'isoplanétisme contenus dans la zone insonifiée. Par exemple, une base de correction des aberrations peut être la base des transducteurs dans le cas d'un aberrateur mince situé à proximité du réseau de transducteurs, ou la base d'ondes planes dans le cas d'un milieu multicouches invariant par translation. Dans le cas général d'un aberrateur volumique spatialement inhomogène, il existe plusieurs domaines d'isoplanétisme quelle que soit la base de correction des aberrations considérée. L'étude de la matrice distorsion pourra permettre alors de déterminer les lois d'aberration associées à chacune de ces zones.

La base de focalisation peut être contenue dans un seul plan focal situé à une profondeur donnée du réseau de transducteurs dans le milieu, ou peut être définie dans un volume en considérant simultanément des points de focalisation situés à différentes profondeurs.

La base d'émission dans laquelle est enregistrée la matrice de réflexion expérimentale peut-être indifféremment la base des transducteurs, la base d'ondes planes (« base de Fourier ») ou une base de focalisation quelconque.

Une matrice de réflexion ou la matrice distorsion peuvent être définies entre différentes bases, le changement de base se faisant soit par l'application de lignes à retard dans le domaine temporel soit par des produits matriciels avec des matrices de propagation dans le domaine fréquentiel. Dans la suite de la description, on appelle matrice de réflexion « focalisée » ou matrice distorsion « focalisée » respectivement une matrice de réflexion ou la matrice distorsion définie dans une base de focalisation en entrée et en sortie.

La matrice de réflexion expérimentale enregistrée est une matrice « réelle », c'est-à-dire composée de coefficients réels dans le domaine temporel, les signaux électriques enregistrés par chacun des transducteurs étant des nombres réels. La matrice de réflexion focalisée large bande est en revanche une matrice « complexe », c'est-à-dire composée de coefficients formés de signaux analytiques complexes. Les signaux analytiques complexes qui forment la matrice de réflexion focalisée large bande peuvent être obtenus en ne conservant que les fréquences positives du spectre des signaux électriques enregistrés ; leur argument coïncide avec la phase des ondes réfléchies par le milieu.

Le milieu modèle ou milieu de référence est par exemple un milieu homogène dans lequel la vitesse du son est constante. La matrice de réflexion de référence (ou plus simplement « matrice de référence ») peut être établie théoriquement pour ce milieu de référence comme une matrice de propagation, c'est-à-dire une matrice de réflexion pour les ondes ultrasonores obtenue pour ce milieu de référence avec, en guise de réflecteur, un miroir plan virtuel dans chaque plan de focalisation. Suivant le degré de connaissance *a priori* du milieu de propagation, le milieu de référence pourra prendre des formes plus élaborées (e.g milieu multicouches *etc.*).

Le produit matriciel terme à terme ou « produit d'Hadamard » de la première matrice de réflexion large bande définie entre la base de focalisation et la base de correction des aberrations avec la matrice conjuguée en phase d'une matrice de réflexion de référence, définie pour un milieu modèle, entre les mêmes bases, revient à retrancher à la phase de chaque élément de la première matrice de réflexion large bande, la phase de l'élément correspondant de la matrice de réflexion de référence. En effet, les éléments d'une matrice ou conjuguée en phase (ou plus simplement « conjuguée » dans la présente description) d'une première matrice, sont des nombres complexes présentant le même module que ceux de la première matrice mais de phase opposée. On retranche ainsi à la phase de chaque élément de la première matrice de réflexion large bande une composante balistique attendue (définie par le milieu modèle), ce qui permet d'isoler la composante distordue du champ réfléchi par le milieu pour chaque émission focalisée en entrée. Les déposants ont montré qu'une analyse de la matrice distorsion permet notamment de discriminer les domaines d'isoplanétisme contenus dans la zone insonifiée et de déterminer, dans le plan d'observation, une loi d'aberrations associée à chaque domaine d'isoplanétisme.

Selon un ou plusieurs exemples de réalisation, la base d'observation est la base de correction des aberrations. On pourra chercher à déterminer la première matrice distorsion entre la base de focalisation et la base de correction des aberrations, par exemple pour quantifier et/ou corriger les aberrations.

Dans un tel cas, la détermination de la première matrice distorsion peut comprendre :

- un changement de base en entrée ou en sortie de ladite première matrice de réflexion focalisée large bande pour obtenir ladite première matrice de réflexion large bande déterminée entre la base de focalisation et la base de correction des aberrations ; et

- le produit matriciel terme à terme de ladite première matrice de réflexion large bande avec la matrice conjuguée en phase de la matrice de réflexion de référence définie entre les mêmes bases.

Selon un ou plusieurs exemples de réalisation, la base d'observation est la base de focalisation et on parle de première matrice distorsion « focalisée ». On pourra chercher à déterminer une matrice distorsion « focalisée », c'est-à-dire définie dans la base de focalisation en entrée et en sortie, par exemple pour déterminer une cartographie de la fonction d'étalement (ou PSF pour « Point Spread Function »), la fonction d'étalement étant définie comme la réponse impulsionnelle spatiale entre les bases de focalisation en entrée et en sortie ; à partir de la PSF, on pourra par exemple quantifier localement la qualité de focalisation (i .e le niveau d'aberrations), la vitesse du son ou le taux de diffusion multiple dans la zone insonifiée du milieu étudié.

La première matrice distorsion focalisée peut être obtenue par changement de base à partir de la première matrice distorsion définie entre la base de focalisation et la base de correction des aberrations.

Alternativement, la première matrice distorsion focalisée peut être construite directement à partir de la première matrice de réflexion focalisée large bande au moyen d'une corrélation spatiale entre chaque ligne et/ou colonne de ladite première matrice de réflexion focalisée large bande et la même ligne et/ou colonne de la matrice de réflexion de référence définie dans la même base. A partir de la première matrice distorsion focalisée, il sera possible par simple changement de base de déterminer la première matrice distorsion définie entre la base de focalisation et la base de correction des aberrations.

Selon un ou plusieurs exemples de réalisation, la détermination de ladite première matrice de réflexion focalisée large bande comprend :

- un changement de base en entrée et en sortie de ladite matrice de réflexion expérimentale exprimée dans le domaine fréquentiel pour former une matrice de réflexion focalisée;
- une sommation cohérente sur ladite première bande spectrale de ladite matrice de réflexion focalisée pour former ladite première matrice de réflexion focalisée large bande.

Alternativement, la première matrice de réflexion focalisée large bande peut être obtenue en appliquant des décalages temporels sur la matrice de réflexion expérimentale. Toutefois, une telle approche ne permet pas d'analyser les données expérimentales sur différentes bandes spectrales, ce qui peut être préjudiciable en cas de dispersion fréquentielle des aberrations.

Selon un ou plusieurs exemples de réalisation, la détermination d'au moins une cartographie d'un paramètre physique dudit milieu hétérogène comprend :

- la détermination des invariants dans ladite base de focalisation de ladite première matrice distorsion, afin d'identifier au moins un premier domaine d'isoplanétisme dans ladite base de focalisation ;
- la détermination pour chaque premier domaine d'isoplanétisme identifié, d'une cartographie d'au moins une première loi d'aberration dans ladite base de correction.

Plusieurs méthodes peuvent être mises en oeuvre pour déterminer les domaines d'isoplanétisme et les lois d'aberration associées à partir de la première matrice distorsion. Selon un ou plusieurs exemples de réalisation, la détermination de ces invariants comprend une décomposition en valeurs singulières de ladite première matrice distorsion, une décomposition en valeurs singulières de ladite première matrice distorsion normalisée, c'est à dire dont le module de chacun des éléments aura été normalisé mais dont la phase aura été préservée, ou une décomposition en valeurs singulières d'une matrice de corrélation normalisée de ladite première matrice distorsion, c'est-à-dire une matrice de corrélation de ladite première matrice distorsion dont le module de chacun des éléments aura été normalisé.

Dans l'hypothèse notamment d'une réflexion spéculaire par le milieu hétérogène, les déposants ont montré qu'une cartographie de la réflectivité locale du milieu hétérogène pour l'ensemble de la zone insonifiée peut être obtenue par une combinaison linéaire des vecteurs singuliers de ladite première matrice distorsion.

Les déposants ont également montré que la décomposition en valeurs singulières de la matrice distorsion permet de filtrer le sous-espace bruit (matrice aléatoire sans corrélation entre ses lignes et colonnes) du sous-espace signal (matrice caractérisée par d'importantes corrélations entre ses lignes et/ou ses colonnes), le sous-espace bruit contenant à la fois le bruit expérimental et la contribution incohérente du champ réfléchi induit par les évènements de diffusion multiple se produisant en amont de la base focalisée.

Selon un ou plusieurs exemples de réalisation, le procédé de caractérisation ultrasonore comprend en outre la détermination dans ladite base d'observation d'une première matrice de réflexion corrigée par la ou lesdites première(s) loi(s) d'aberration. Cela permet, notamment dans l'hypothèse d'une réflexion diffuse par l'échantillon, de déterminer une cartographie de la réflectivité locale du milieu, ou « image », corrigée des aberrations.

Sur la base de ladite première matrice de réflexion corrigée de la zone insonifiée, il est possible selon un ou plusieurs exemples de réalisation, de déterminer une matrice distorsion corrigée des aberrations correspondant, dans ladite base de correction des aberrations, au produit matriciel terme à terme de ladite matrice de réflexion corrigée déterminée dans ladite base de correction des aberrations, avec la matrice conjuguée en phase de ladite matrice de réflexion de référence. La matrice distorsion corrigée des aberrations permet par détermination de ses invariants dans la base de focalisation d'affiner la correction dans le premier domaine d'isoplanétisme identifié. Elle permet également d'identifier au moins un deuxième domaine d'isoplanétisme dans la base de focalisation et de déterminer pour chaque deuxième domaine d'isoplanétisme identifié, une cartographie d'une deuxième loi d'aberration dans la base de correction des aberrations. Le procédé peut être ainsi itéré autant de fois que nécessaire suivant le nombre de domaines d'isoplanétisme contenu dans la zone insonifiée pour obtenir une cartographie de la réflectivité locale du milieu, ou « image », corrigée des aberrations. Ce procédé itératif s'applique plus particulièrement dans l'hypothèse d'une réflexion diffuse ou intermédiaire, c'est-à-dire une réflexion mixte spéculaire et diffuse.

Selon un ou plusieurs exemples de réalisation, la détermination d'au moins une cartographie d'un paramètre physique dudit milieu hétérogène comprend la détermination pour au moins un premier domaine d'isoplanétisme identifié, d'une première fonction d'étalement (PSF) dans ladite base de focalisation. La fonction d'étalement correspond à la transformée de Fourier spatiale de la loi d'aberration mesurée dans le plan de correction des aberrations. Elle est invariante spatialement sur chaque domaine d'isoplanétisme. Elle peut être obtenue selon un exemple à partir de la décomposition en valeurs singulières de la matrice distorsion focalisée, c'est-à-dire définie dans la base de focalisation en entrée et en sortie.

Selon un ou plusieurs exemples de réalisation, la détermination d'au moins une cartographie d'un paramètre physique dudit milieu hétérogène comprend la détermination de la vitesse du son dans la zone insonifiée. Il s'agit pour cela d'étudier par exemple l'évolution de la première valeur singulière de la matrice distorsion en fonction du modèle de vitesse utilisé pour modéliser la matrice de référence. Le modèle de vitesse optimal est celui qui maximise la première valeur singulière de la matrice distorsion. Une alternative est d'étudier la matrice distorsion focalisée. Celle-ci permet en effet d'étudier l'évolution de la fonction d'étalement en fonction du modèle de vitesse utilisé pour le calcul de la matrice de référence. Le modèle de vitesse optimal est celui qui minimise la largeur de la fonction d'étalement normalisée par la longueur d'onde.

Selon un ou plusieurs exemples de réalisation, la détermination d'au moins une cartographie d'un paramètre physique dudit milieu hétérogène comprend la détermination d'un taux de diffusion multiple dans la zone insonifiée. Il s'agit pour cela d'étudier par exemple la matrice distorsion focalisée dont on aura au préalable corrigé les aberrations. Le rapport entre la moyenne de l'intensité incohérente (diffusion multiple) obtenue au-delà de la tâche focale et l'intensité au point de focalisation (ligne centrale de la matrice distorsion) donne accès à un taux local de diffusion multiple.

Selon un ou plusieurs exemples de réalisation, le procédé de caractérisation comprend en outre l'identification et/ou la suppression de la composante spéculaire du champ réfléchi et/ou des réflexions multiples induites entre le réseau de transducteurs et les différentes interfaces ou couches du milieu hétérogène. A cette fin, la matrice distorsion peut être projetée dans la base de Fourier à la fois en entrée et en sortie. Dans cette base, les composantes spéculaires et multiplement réfléchies du champ apparaissent pour des couples d'angles incident et réfléchi précis. Elles peuvent donc être aisément filtrées et seule la composante diffuse (speckle) du champ réfléchi est conservée. Cette discrimination de la composante diffuse permet ensuite d'accéder directement aux lois d'aberration à appliquer en entrée et sortie pour corriger la matrice de réflexion et obtenir une image optimale du milieu, ce qui est n'est pas possible si la composante spéculaire prédomine. En outre, le filtrage de la matrice distorsion dans le plan de Fourier permet d'éliminer les réflexions multiples qui polluent par exemple les images échographiques à faible profondeur (échos multiples entre la sonde et les couches superficielles du corps humain).

Selon un ou plusieurs exemples de réalisation, le procédé de caractérisation comprend en outre :

- une étape de détermination, à partir de ladite matrice de réflexion expérimentale, d'au moins une deuxième matrice de réflexion focalisée large bande, définie dans une base de focalisation en entrée et en sortie, dans une deuxième bande spectrale différente de ladite première bande spectrale ;
- une étape de détermination d'au moins une deuxième matrice distorsion définie dans ladite deuxième bande spectrale entre ladite base de focalisation et ladite base d'observation, ladite deuxième matrice distorsion résultant, directement ou après changement de base, du produit matriciel terme à terme de ladite deuxième matrice de réflexion large bande, définie entre ladite base de focalisation et ladite base de correction des aberrations, avec la matrice conjuguée en phase d'une matrice de réflexion de référence, définie pour un milieu modèle, entre les mêmes bases.

Les matrices distorsion définies sur différentes bandes spectrales peuvent être utilisées pour déterminer autant de matrices de réflexion corrigées qui pourront ensuite être sommées pour former une seule matrice de réflexion large bande. Cette analyse spectrale permet de corriger les aberrations chromatiques induites par la dispersion fréquentielle de la vitesse du son dans le milieu. La pluralité des matrices distorsion obtenues sur différentes bandes spectrales pourront également être utilisées pour déterminer une cartographie *spectrale* de la vitesse du son ou du taux de diffusion multiple.

La présente description concerne, selon un deuxième aspect, un système de caractérisation ultrasonique non invasive d'un milieu hétérogène configuré pour la mise en oeuvre de l'ensemble des exemples de procédés de caractérisation ultrasonique tels que décrits précédemment. Le système de caractérisation ultrasonique selon le deuxième aspect comprend :

- Au moins un premier réseau de transducteurs configuré pour générer une série d'ondes ultrasonores incidentes dans une zone dudit milieu hétérogène et enregistrer les ondes ultrasonores rétrodiffusées par ladite zone en fonction du temps;
- une unité de calcul, couplée audit au moins un premier réseau de transducteurs, et configurée pour :

  ○ enregistrer une matrice de réflexion expérimentale définie entre une base d'émission à l'entrée et la base des transducteurs en sortie ;
  ○ déterminer, à partir de ladite matrice de réflexion expérimentale, au moins une première matrice de réflexion large bande, définie dans une base de focalisation en entrée et en sortie, dans une première bande spectrale ;
  ○ déterminer une première matrice distorsion définie dans ladite bande spectrale, entre ladite base de focalisation et une base d'observation, ladite première matrice distorsion résultant, directement ou après changement de base, du produit matriciel terme à terme de ladite première matrice de réflexion large bande déterminée entre ladite base de focalisation et ladite base de correction, avec la matrice conjuguée en phase d'une première matrice de réflexion de référence, définie pour un milieu modèle, entre les mêmes bases;
  ○ déterminer à partir de ladite première matrice distorsion, au moins une cartographie d'un paramètre physique dudit milieu hétérogène.

Le système de caractérisation selon la présente description peut comprendre au moins un réseau de transducteurs à la fois émetteur et récepteur, ou plusieurs réseaux de transducteurs, certains étant dédiés à l'émission, d'autres à la réception des ondes ultrasonores.

BREVE DESCRIPTION DES FIGURES

D'autres avantages et caractéristiques de la technique présentée ci-dessus apparaîtront à la lecture de la description détaillée ci-dessous, faite par référence aux FIGS. dans lesquelles :

- Les FIGS. 1A - 1C (déjà décrites) illustrent des mécanismes d'émission/réception connus pour l'imagerie et la quantification ultrasonore ;
- La FIG. 2 (déjà décrite) illustre une technique de correction des aberrations en imagerie ultrasonore, selon l'art antérieur, basée sur la focalisation adaptative ;
- les FIGS. 3A - 3B (déjà décrites) illustrent de manière schématique la notion de domaines d'isoplanétisme ;
- la FIG. 4 illustre un exemple de système de caractérisation ultrasonore pour la mise en oeuvre des procédés de caractérisation ultrasonore selon la présente description ;
- la FIG. 5 illustre une étape du procédé selon la présente description, visant à déterminer, selon un exemple de réalisation, une première matrice de réflexion focalisée large bande à partir d'une matrice de réflexion expérimentale;
- la FIG. 6 illustre les opérations matricielles de changement de base pour la projection de matrices de réflexion enregistrée dans la base focalisée ;
- les FIGS. 7A, 7B illustre une étape du procédé selon la présente description, visant à déterminer, selon un exemple de réalisation, une première matrice distorsion à partir de la matrice de réflexion focalisée large bande ;
- la FIG. 8 illustre des images échographiques d'un phantom sans aberrations et avec aberrations et les matrices distorsion focalisées correspondantes, déterminées à une profondeur donnée et correspondant à une ligne de l'image ;
- les FIGS. 9A et 9B illustrent respectivement la distribution des valeurs singulières de la matrice distorsion correspondant au phantom avec aberrations montrée sur la FIG. 8 (FIG. 9A) et la phase du premier vecteur propre associé dans le plan de Fourier (FIG. 9B);
- la FIG. 10 illustre un exemple d'utilisation de la matrice distorsion (cas d'une couche d'eau aberrante sur un phantom donnant lieu à un seul domaine d'isoplanétisme) et illustre plus précisément des images échographiques sans/avec correction, les matrices distorsion focalisées correspondantes déterminée à une profondeur donnée et correspondant à une ligne de l'image et une représentation de la fonction d'étalement avec et sans correction moyennée sur la zone insonifiée et issue de la matrice distorsion focalisée ;
- La FIG. 11 illustre un exemple d'utilisation de la matrice distorsion (sur un phantom de sein humain générant plusieurs domaines d'isoplanétisme) et illustre plus précisément une image échographique conventionnelle et des images échographiques après correction des aberrations à l'aide du premier vecteur de la matrice distorsion et du deuxième vecteur de la matrice distorsion ;

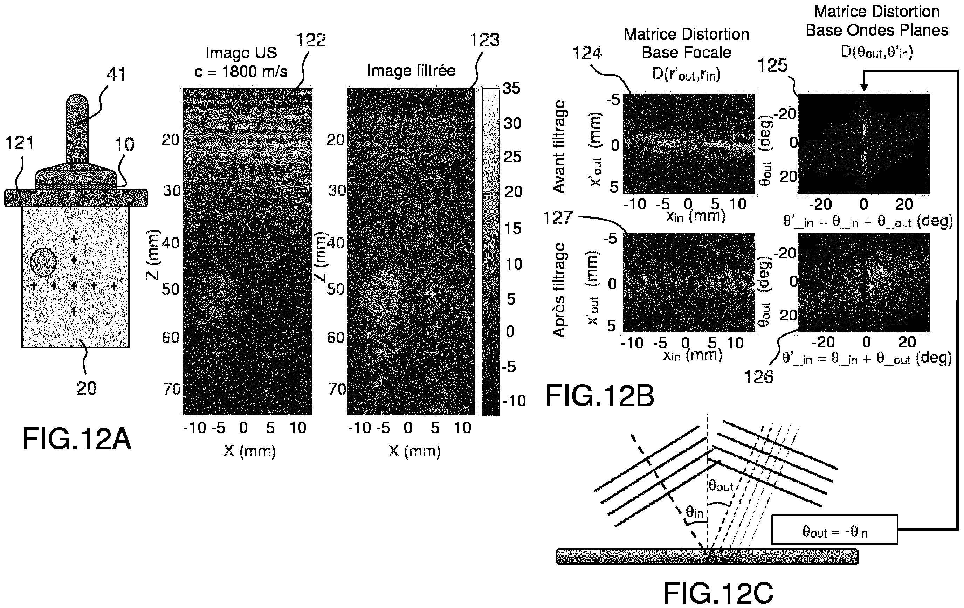

- les FIGS. 12A - 12C illustrent un exemple d'utilisation de la matrice distorsion pour le filtrage des réflexions multiples et plus précisément, FIG. 12A, un schéma décrivant la configuration expérimentale (plaque de plexiglas placée entre la sonde échographique et le phantom), FIG. 12B, une image échographique pour un modèle de vitesse homogène (c=1800 m/s), avant et après suppression des composantes spéculaires et de réflexions multiples de l'image, des exemples de matrice distorsion focalisée pour une ligne de l'image échographique, avant et après filtrage, les mêmes matrices distorsion projetées dans le base des ondes planes, et FIG. 12C, un schéma expliquant la signature des composantes spéculaire et de réflexion multiple dans la base des ondes planes ;

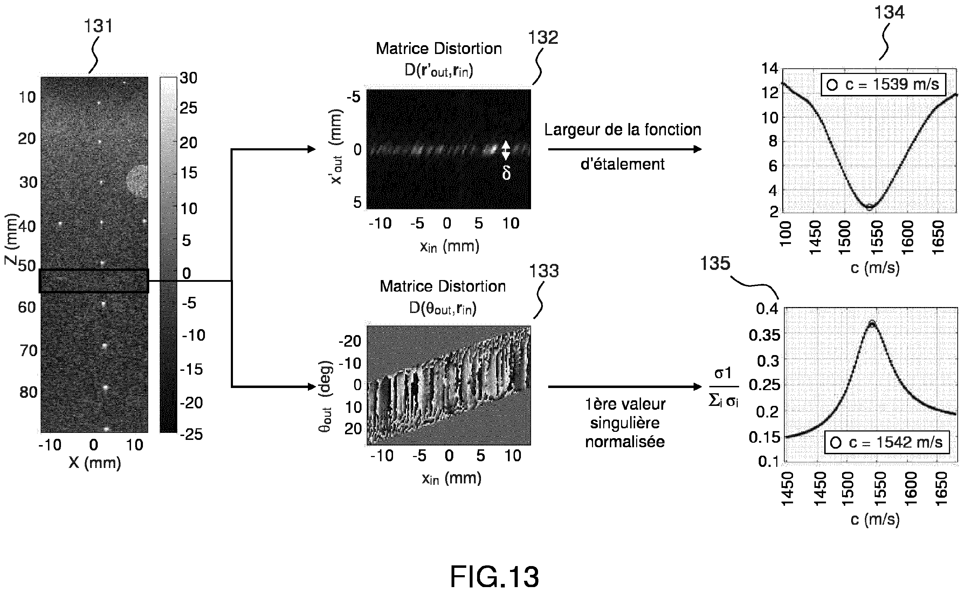

- La FIG. 13 illustre un exemple d'utilisation de la matrice distorsion pour une mesure quantitative de la vitesse du son et illustre plus précisément une image échographique du phantom étudié, un exemple de matrice distorsion focalisée pour une ligne de l'image et un modèle homogène de vitesse (c=1540 m/s), la matrice distorsion correspondante entre le plan focal en entrée et le plan de Fourier, la largeur de la fonction d'étalement normalisée par la longueur d'onde en fonction de la vitesse des ondes c, la première valeur singulière normalisée de la matrice distorsion en fonction de cette même vitesse ;

- la FIG. 14 illustre un exemple d'utilisation de la matrice distorsion pour établir une cartographie de la vitesse du son dans le milieu et illustre plus précisément une image échographique conventionnelle du phantom à travers la plaque de plexiglas pour un modèle de vitesse homogène (c=1540 m/s), et la même image après filtrage des réflexions multiples et optimisation du modèle de vitesse pour chaque ligne de l'image, le profil de vitesse du son intégré sur la profondeur ;

- la FIG. 15 illustre un exemple d'utilisation de la matrice distorsion pour la quantification locale de la diffusion multiple et montre plus précisément une image échographique d'un phantom standard, un schéma expliquant l'occurrence de diffusion multiple dans la matrice distorsion, la matrice distorsion focalisée pour une ligne de l'image échographique, un exemple de fonction d'étalement déduite de la précédente matrice mettant en évidence un fond incohérent lié à la composante de diffusion multiple, le taux de diffusion multiple en chaque pixel de l'image échographique ;

Dans les différents modes de réalisation qui vont être décrits par référence aux figures, des éléments semblables ou identiques portent les mêmes références.

DESCRIPTION DETAILLEE

Dans la description détaillée qui suit, seuls certains modes de réalisation sont décrits en détail pour assurer la clarté de l'exposé mais ces exemples ne visent pas à limiter la portée générale des principes ressortant de la présente description.

Les différents modes de réalisation et aspects décrits dans la présente description peuvent être combinés ou simplifiés de multiples manières. En particulier, les étapes des différents procédés peuvent être répétées, interverties, exécutées en parallèle, sauf précision contraire.

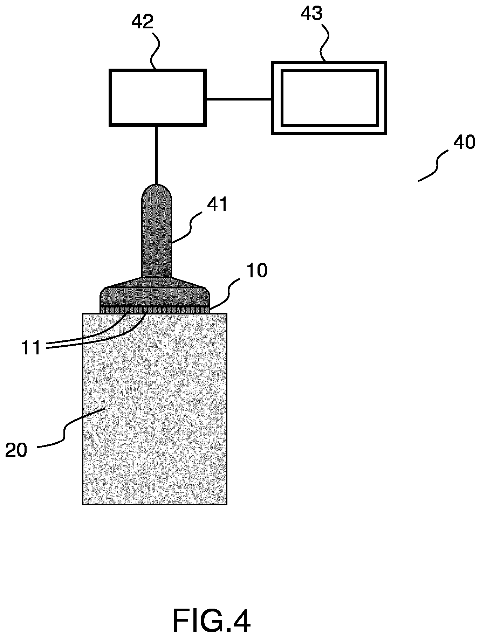

La FIG. 4 illustre un exemple d'un système 40 de caractérisation ultrasonore pour la mise en oeuvre des procédés de caractérisation ultrasonore d'un milieu hétérogène 20, selon la présente description. Le système 40 comprend au moins un premier réseau 10 de transducteurs 11, par exemple un réseau linéaire ou bidimensionnel ; les transducteurs sont par exemple des transducteurs piézoélectriques ultrasonores pouvant se présenter classiquement sous la forme d'une barrette rigide mise en contact avec le milieu 20. Le réseau de transducteurs fait par exemple partie d'un dispositif de sondage 41; le réseau de transducteurs est connecté à une unité de calcul 42, qui peut elle-même être reliée à un dispositif d'affichage 43; l'unité de calcul émet et enregistre des signaux électriques vers /à partir de chacun des transducteurs 11. Les transducteurs ultrasonores transforment ensuite ces signaux électriques en ondes ultrasonores et inversement. L'unité de calcul 42 est configurée pour la mise en oeuvre d'étapes de calcul ou traitement notamment pour la mise en oeuvre d'étapes de procédés selon la présente description.

Dans la FIG. 4 comme dans la suite de la description, il est fait référence à un réseau de transducteurs pour l'émission et la réception, étant bien entendu que, dans un cas plus général, plusieurs réseaux de transducteurs pourront être utilisés simultanément. Ils pourront être à la fois émetteur et récepteur, ou bien seulement émetteur pour certains et seulement récepteur pour d'autres.

Lorsque dans la présente description, il est fait référence à des étapes de calcul ou traitement pour la mise en oeuvre notamment d'étapes de procédés, il est entendu que chaque étape de calcul ou traitement peut être mis en oeuvre par logiciel, hardware, firmware, microcode ou toute combinaison appropriée de ces technologies. Lorsqu'un logiciel est utilisé, chaque étape de calcul ou traitement peut être mise en oeuvre par des instructions de programme d'ordinateur ou du code logiciel. Ces instructions peuvent être stockées ou transmises vers un support de stockage lisible par un ordinateur (ou unité de calcul) et/ou être exécutées par un ordinateur (ou unité de calcul) afin de mettre en oeuvre ces étapes de calcul ou traitement.

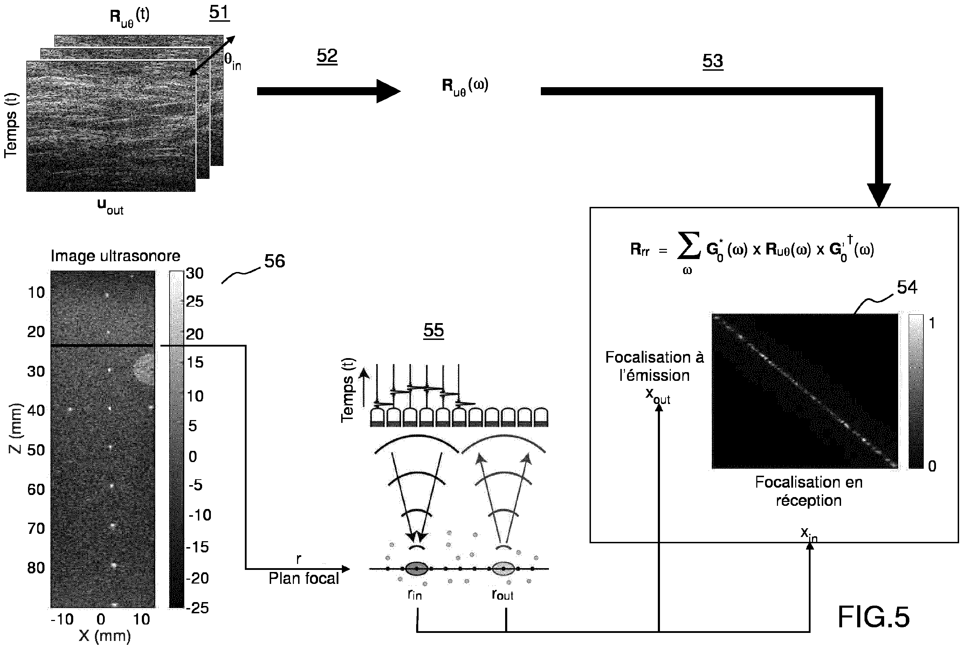

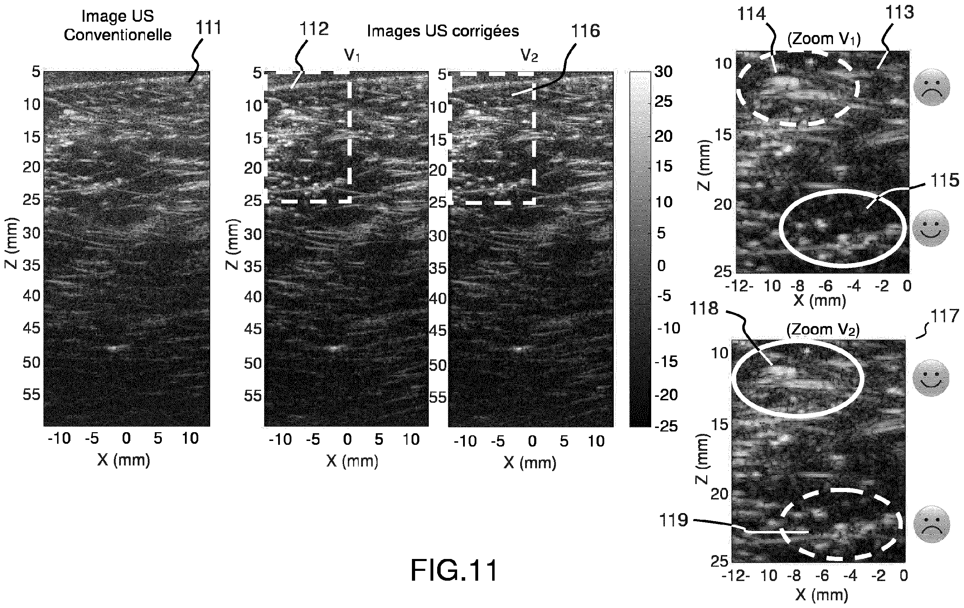

Les différents résultats expérimentaux montrés dans la présente description (FIGS 5 à 15) ont été réalisés sur deux phantoms ultrasonores, i.e des échantillons synthétiques reproduisant les propriétés mécaniques des tissus biologiques (c = 1540 m/s) et générant un speckle ultrasonore caractéristique de ces derniers. Le premier phantom permet de quantifier les performances en termes de résolution et de contraste du système d'imagerie. Il comprend en effet des cibles quasi-ponctuelles situées à différentes profondeurs et positions latérales ainsi qu'une inclusion échogène hétérogène de 5 mm de diamètre (FIGS 5 à 10 et 12 à 15). Le second phantom reproduit la forme et les propriétés des tissus du sein et présente des échos brillants mimant la présence de micro-calcifications en son sein (FIG. 11).

La présente description décrit des procédés et systèmes de caractérisation ultrasonore non invasive d'un échantillon hétérogène. Ces procédés et systèmes sont basés sur la détermination d'au moins une première matrice appelée « matrice distorsion » dans la suite de la description. Les FIGS 5 à 7 illustrent selon des exemples des étapes de procédés pour déterminer la matrice distorsion.

Comme illustré sur la FIG. 5, étape 51, le procédé de caractérisation ultrasonore non invasive comprend une étape de génération, au moyen d'un réseau 10 de transducteurs 11 (FIG. 4), d'une série d'ondes ultrasonores incidentes dans une zone dudit milieu hétérogène et une étape d'enregistrement d'une matrice de réflexion expérimentale $R_{ui}(t)$ définie entre une base d'émission i en entrée et la base des transducteurs u en sortie ; la base d'émission i en entrée est par exemple la base des transducteurs u, la base d'ondes planes $\theta$ ou la base focalisée r, comme décrit au moyen des FIGS 1A - 1C. Dans l'exemple de la FIG. 5, il s'agit par exemple d'une matrice de réflexion expérimentale $R_{u\theta}(t)$ enregistrée entre la base d'ondes planes en entrée et la base des transducteurs en sortie.

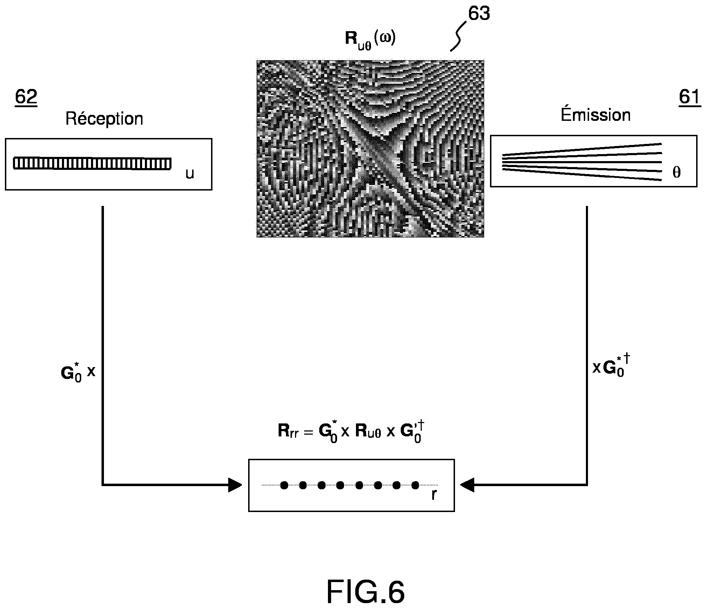

Le procédé comprend également une étape de détermination, à partir de ladite matrice de réflexion expéri-mentale $R_{ui}(t)$, d'au moins une première matrice de réflexion focalisée large bande $R_{rr}(\Delta\omega_1)$, définie dans une base de focalisation r en entrée et en sortie, dans une première bande spectrale $\Delta\omega_1$. Cette étape préalable à la construction de la « matrice distorsion » est illustrée selon un exemple de réalisation, au moyen des FIGS. 5 et 6.

Dans l'exemple de la FIG. 5, une opération 52 de transformée de Fourier discrète permet d'exprimer la matrice de réflexion expérimentale dans le domaine fréquentiel $R_{u\theta}(\omega)$. Une étape 53 dite de « focalisation large bande » de la matrice de réflexion expérimentale comprend la projection de la matrice de réflexion $R_{u\theta}(\omega)$ dans la base focale en entrée et en sortie afin d'obtenir une matrice de réflexion focalisée $R_{rr}(\omega)$, puis une sommation cohérente sur la bande spectrale $\Delta\omega_1$. On obtient alors une matrice de réflexion focalisée large bande dont un exemple est illustré (image 54) à une profondeur z donnée.

La FIG. 6 illustre la projection de la matrice de réflexion $R_{u\theta}(\omega)$ dans la base focale r en entrée et en sortie. A titre d'exemple, l'image 63 représente la phase de la matrice $R_{u\theta}(\omega)$ à la fréquence f=3.48 MHz, acquise dans le premier phantom, comprenant des cibles quasi-ponctuelles ainsi qu'une inclusion échogène hétérogène de 5 mm de diamètre et dont une image échographique est montrée sur la FIG. 5 (image 56). Cela revient à effectuer une formation de voies en émission (61) et en réception (62) afin de sommer de façon cohérente les échos venant d'un même diffuseur. Mathématiquement, ces opérations peuvent être décrites à l'aide de matrices de propagation décrivant les trajets aller et retour des ondes dans le milieu. Le passage de la base des ondes planes incidentes à la base de focalisation est ainsi modélisé par la matrice $\mathbf{G}_0'(\omega) = [G_0'(\mathbf{r_{in}}, \theta_{in}, \omega)]$, dont les éléments sont donnés par

$$G_0'(\mathbf{r_{in}}, \theta_{in}, \omega) = \exp[jk(z_{in}\cos\theta_{in} + x_{in}\sin\theta_{in})] \quad (1)$$

avec $\mathbf{r_{in}} = (x_{in}, z_{in})$ le vecteur position des points de focalisation dans le milieu, $\theta_{in}$ l'angle d'incidence de l'onde émise et $k = \omega/c$ le nombre d'onde. Le trajet des échos réfléchis depuis le milieu vers le réseau de transducteurs peut être lui décrit par la matrice de propagation $\mathbf{G_0}(\omega) = [G_0(\mathbf{r_{out}}, \mathbf{u_{out}}, \omega)]$, dont les éléments sont donnés par

$$G_0(\mathbf{r_{out}}, \mathbf{u_{out}}, \omega) = \frac{\exp[jk\|\mathbf{u_{out}}-\mathbf{r_{out}}\|]}{\sqrt{k\|\mathbf{u_{out}}-\mathbf{r_{out}}\|}} \frac{z_{out}}{\|\mathbf{u_{out}}-\mathbf{r_{out}}\|} \quad (2)$$

avec $\mathbf{r_{out}} = (x_{out}, z_{out})$ le vecteur position des points de focalisation dans le milieu et $\mathbf{u_{out}}$ le vecteur position des transducteurs. La dernière équation est une traduction matricielle de l'intégrale de Rayleigh Sommerfeld. Son premier terme est la fonction de Green 2D de l'équation d'onde, ou plutôt ici sa forme asymptotique. Le terme de droite est le cosinus directeur entre la normale du réseau de transducteur et le vecteur radial $(\mathbf{u_{out}} - \mathbf{r_{out}})$.

Les opérations de formation de voies à l'émission et la réception peuvent être interprétées comme une rétropropagation des échos vers les diffuseurs qui leur sont associés. Dans le domaine fréquentiel, cela se traduit par une conjugaison en phase des matrices de propagation. La matrice de réflexion focalisée $R_{rr}$ peut ainsi être déduite de la matrice de réflexion expérimentale par le produit matriciel suivant :

$$\mathbf{R_{rr}}(\omega) = \mathbf{G_0^*}(\omega) \times \mathbf{R_{u\theta}}(\omega) \times \mathbf{G_0'^\dagger}(\omega) \qquad (3)$$

où le symbole $\times$ représente le produit matriciel et l'exposant $\dagger$ désigne la matrice transposée conjuguée. Bien entendu, la projection de la matrice de réflexion dans les bases focales en entrée et en sortie pourrait se faire également à partir d'une matrice de réflexion expérimentale exprimée en entrée dans une autre base, par exemple la base des transducteurs. Il suffirait pour cela d'utiliser dans l'équation (3) à la place de la matrice de propagation $\mathbf{G_0'}$ la matrice de propagation $\mathbf{G_0}$.

L'étape suivante consiste à effectuer une somme des matrices de réflexion obtenues sur la bande spectrale $\Delta\omega_1$ de telle sorte à obtenir une matrice de réflexion focalisée large bande

$$\mathbf{R_{rr}}(\tau) = \sum_{\omega \in \Delta\omega_1} \mathbf{R_{rr}}(\omega)\, e^{j\omega\tau} \qquad (4)$$

$\tau$ est le temps d'écho associé au réseau virtuel de transducteurs dans la base de focalisation. Chaque coefficient R $(\mathbf{r_{out}}, \mathbf{r_{in}}, \tau)$ de la matrice de réflexion focalisée large bande correspond au signal analytique qui serait enregistré par le transducteur virtuel en $\mathbf{r_{out}}$ immédiatement après l'émission d'une impulsion depuis un transducteur virtuel en $\mathbf{r_{in}}$ (schéma 55, FIG. 5).

La diagonale de la matrice $\mathbf{R_{rr}}(\tau = 0)$ au temps balistique $\tau = 0$ correspond à au signal confocal avec focalisation à l'émission et la réception sur le même point. Elle donne donc directement une ligne de l'image échographique (image 56) si la base de focalisation se limite à un plan focal situé à une distance z du réseau réel de transducteurs. Si la base de focalisation contient au contraire tous les points de focalisation du volume à imager, la diagonale de $\mathbf{R_{rr}}(\tau = 0)$ donne directement l'ensemble de l'image échographique. Dans ce dernier cas, la matrice de réflexion est une matrice par blocs dont seuls les blocs diagonaux sont non nuls. Ces derniers correspondent aux matrices de réflexion focalisée à chaque profondeur z du milieu. Dans la suite de la description, afin d'alléger les notations, la matrice de réflexion large bande sera appelée simplement $\mathbf{R_{rr}}$, il ne sera plus fait mention du temps $\tau$ car ce dernier sera toujours fixé au temps balistique $\tau = 0$. Cependant, pour certaines applications, notamment pour la correction d'aberrations d'ordre élevé, l'étude de la diffusion multiple ou la mesure de la vitesse du son, les matrices réflexion et distorsion pourront être également examinées à des temps $\tau \neq 0$.

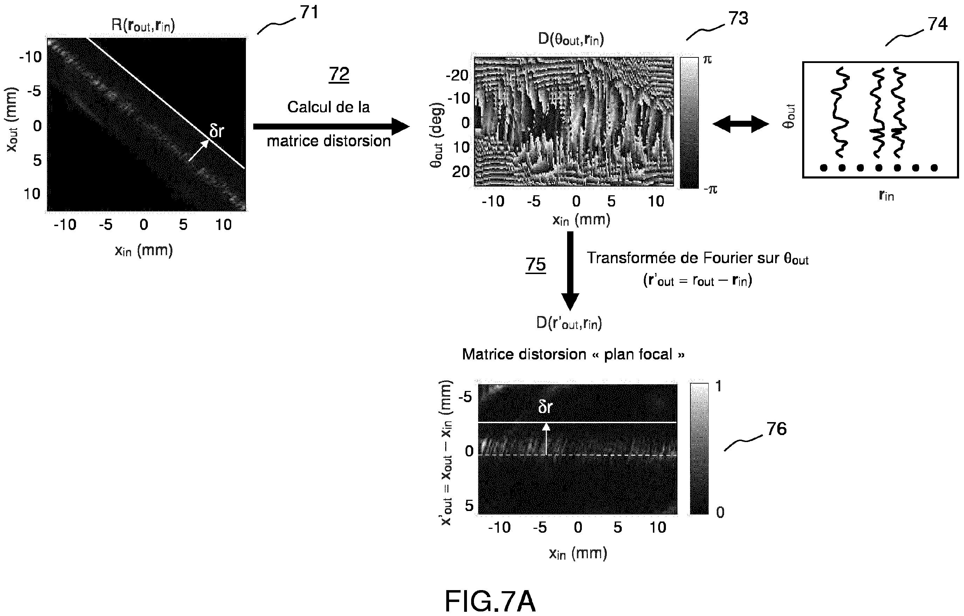

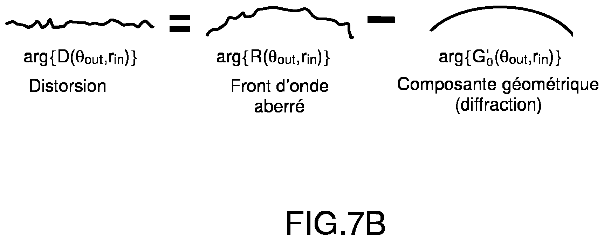

Les FIGS. 7A, 7B illustrent une étape du procédé selon la présente description, visant à déterminer, selon un exemple de réalisation, une première matrice distorsion D à partir de la matrice de réflexion focalisée large bande $\mathbf{R_{rr}}$.

Afin d'estimer la composante aberrée des fronts d'onde, on commence par choisir une base optimale de correction des aberrations. Par exemple, dans le cas d'un aberrateur mince situé à proximité du réseau de transducteurs, la base des transducteurs semble être la plus appropriée. Dans le cas choisi dans cet exemple d'illustration du procédé de caractérisation, le milieu hétérogène est un milieu multicouches invariant par translation et la base d'ondes planes semble plus appropriée. C'est par exemple le cas de l'échographie du foie, où les ondes acoustiques doivent traverser une succession de couches de muscle et de tissus adipeux. Cet exemple est considéré par la suite mais la présente description ne se restreint en aucun cas à une correction des aberrations depuis la base de Fourier.

L'image 71 (FIG. 7A) représente un exemple de matrice de réflexion focalisée large bande $\mathbf{R_{rr}}$ enregistrée en présence d'aberration générée par l'insertion d'une couche d'eau (c = 1480 m/s) de 10 mm d'épaisseur entre le réseau de transducteurs et le phantom (c = 1540 m/s). Dans un premier temps, un changement de base de la matrice de réflexion $\mathbf{R_{rr}}$ en sortie (ou en entrée) dans la base des ondes planes permet de former la matrice de réflexion large bande $\mathbf{R_{\theta r}}$, telle que

$$\mathbf{R_{\theta r}} = {}^t\mathbf{G_0'}(\omega_c) \times \mathbf{R_{rr}} \qquad (5)$$

où on considère la matrice $\mathbf{G_0'}$ à la fréquence centrale $\omega_c$ de la bande spectrale $\Delta v_1$. Physiquement, chaque ligne de la matrice $\mathbf{R_{\theta r}}$ ainsi obtenue correspond au front d'onde rétrodiffusé en champ lointain pour chaque point insonifié $\mathbf{r_{in}}$. Chaque front d'onde possède deux composantes : une composante géométrique, lié à la diffraction de l'onde entre le plan des transducteurs et le plan focal, et une composante distordue, liée aux aberrations subies par le front d'onde à l'aller et au retour. Afin de séparer les deux composantes, la matrice $\mathbf{R_{\theta r}}$ est comparée à une matrice de référence qu'on obtiendrait dans un milieu modèle, par exemple un milieu homogène sans aberration (possédant uniquement la composante géométrique). Cette matrice de référence dans le cas d'un milieu homogène sans aberrations n'est autre que la matrice de propagation en milieu homogène $\mathbf{G}'_0$. On crée alors une nouvelle matrice (FIG. 7A, étape 72), appelée matrice distorsion dans la présente description, à partir du produit d'Hadamard ou produit matriciel terme à terme entre ladite première matrice de réflexion large bande $\mathbf{R}_{\theta r}$ déterminée entre la base de focalisation et la base de correction des aberrations, et la matrice conjuguée en phase de la matrice de réflexion de référence, $\mathbf{G}'^*_0(\omega_c)$, définie entre les mêmes bases à la fréquence centrale $\omega_c$ :

$$\mathbf{D}_{\theta r} = \mathbf{R}_{\theta r} \circ \mathbf{G}'^{\dagger}_0(\omega_c) \qquad (6)$$

où le symbole o représente le produit matriciel terme à terme (produit matriciel d'Hadamard) et l'exposant † désigne la matrice transposée conjuguée. Pour rappel, les éléments de la matrice $\mathbf{G}'^{\dagger}_0$ conjuguée en phase de la matrice $^t\mathbf{G}'_0$ sont des nombres complexes présentant le même module que ceux de $^t\mathbf{G}'_0$ mais de phase opposée. En termes de coefficients matriciels, cette équation s'écrit :

$$D(\theta_{\text{out}}, \mathbf{r_{in}}) = R(\theta_{\text{out}}, \mathbf{r_{in}}) \times G'^*_0(\mathbf{r_{in}}, \theta_{\text{out}}, \omega_c) \qquad (7)$$

L'opération effectuée ci-dessus est illustrée par la FIG. 7B. Elle consiste à soustraire au front d'onde mesuré sa composante géométrique déterministe et ainsi isoler sa composante distordue. Chaque colonne de la matrice $\mathbf{D}_{\theta r}$ contient cette composante aberrée du front d'onde vue depuis le champ lointain pour chaque point de focalisation $\mathbf{r_{in}}$. Ainsi, en pratique, pour isoler la composante distordue du front d'onde réfléchi, on retranche à la phase du champ réfléchi, la phase du champ qui serait obtenu idéalement en l'absence d'aberrations, pour un milieu modèle.

Dans le cas d'un milieu modèle inhomogène, l'expression de la matrice de réflexion de référence $\mathbf{G}'_0$ devient plus compliquée que celle donnée en équation (1). Par exemple, dans le cas d'un milieu multicouches, la matrice $\mathbf{G}'_0$ pourra être calculée analytiquement par un produit matriciel entre les différentes matrices de transmission associées à la propagation de l'onde dans chacune des couches. Pour un milieu modèle plus compliqué, typiquement non invariant par translation (e.g interface courbe), la matrice $\mathbf{G}'_0$ pourra être déterminée au moyen d'une simulation numérique ou d'un calcul semi-analytique. A noter que si les coefficients de la matrice de réflexion de référence présentent un module inhomogène, la matrice de référence pourra être normalisée en imposant un module constant pour chacun de ces coefficients mais en préservant leur phase.

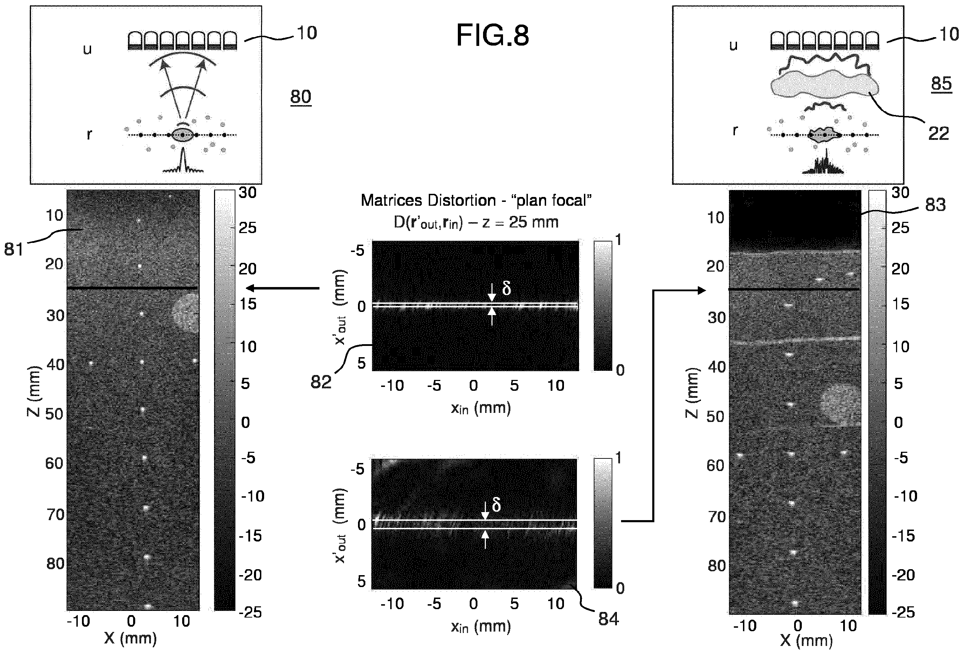

L'image 73 sur la FIG. 7A montre la phase de la matrice distorsion $\mathbf{D}_{\theta r}$ déduite de la matrice de réflexion dont le module est représenté sur l'image 71. Cette dernière correspond à la ligne de l'image échographique 83 (FIG. 8) réalisée sur le phantom en présence d'une couche d'eau aberrante. Le schéma 74 illustre les fronts d'onde aberrés isolés pour chaque point du plan focal et la manière dont ils sont stockés dans la matrice distorsion.

La matrice distorsion peut également être étudiée dans le plan focal. Une matrice distorsion « plan focal » $\mathbf{D}_{rr}$ peut être obtenue à partir de la matrice distorsion exprimée dans le plan d'observation $\mathbf{D}_{\theta r}$ par le changement de base suivant :

$$\mathbf{D}_{rr} = \widehat{\mathbf{G}}'^*_0(\omega_c)\mathbf{D}_{\theta r} \qquad (8)$$

où $\widehat{\mathbf{G}}'_0$ est une matrice de propagation normalisée dont les éléments sont donnés par

$$\widehat{G}'_0(\mathbf{r'_{out}}, \theta_{\text{out}}, \omega) = \frac{\widehat{G}'_0(\mathbf{r'_{out}}, \theta_{\text{out}}, \omega)}{\widehat{G}'_0(\mathbf{r'_{out}}=0, \theta_{\text{out}}, \omega)} = \exp[jkx'_{out}\sin\theta_{\text{out}}] \qquad (9)$$

L'équation (8) se réécrit donc en termes de coefficients matriciels de la manière suivante :

12

$$D(\mathbf{r'_{out}}, \mathbf{r_{in}}) = \sum_{\theta_{out}} D(\theta_{out}, \mathbf{r_{in}}) \exp[-jk_c x'_{out} \sin\theta_{out}] = R(\mathbf{r_{out}} - \mathbf{r_{in}}, \mathbf{r_{in}}) \quad (10)$$

où $k_c$ est le nombre d'onde à la fréquence centrale $\omega_c$. Dans le cas présent où la base de correction des aberrations est la base de Fourier, la matrice de distorsion focalisée $\mathbf{D_{rr}}$ est simplement déduite par une transformée de Fourier spatiale de $\mathbf{D_{\theta r}}$ en sortie. Toutefois, il faut garder à l'esprit que la relation entre les deux matrices sera différente [équation (8)] si le plan de correction n'est plus le plan de Fourier.

Les colonnes de $\mathbf{D_{rr}}$ dont l'image 76 représente le module correspondent au champ réfléchi dans le plan image recentré sur le point de focalisation $\mathbf{r_{in}}$. La matrice $\mathbf{D_{rr}}$ donne donc l'évolution de la fonction d'étalement en réflexion en chaque point de l'image échographique, la fonction d'étalement étant la réponse impulsionnelle spatiale du système d'imagerie, c'est-à-dire la tache focale recentrée sur le point de focalisation. Comme cela sera décrit par la suite, la fonction d'étalement permet de quantifier et caractériser les aberrations ainsi que la diffusion multiple induites par l'échantillon en amont du plan focal.

A titre d'illustration, la FIG. 8 illustre une image échographique 81 du phantom obtenu sans aberrations, au moyen d'un schéma expérimental rappelé sur le schéma 80. L'image 82 illustre la matrice distorsion focalisée déterminée à une profondeur donnée et correspondant à une ligne de l'image 81; l'image 83 est une image échographique du phantom obtenu en présence d'aberrations (couche d'eau aberrante 22, schéma 85) et l'image 84 illustre la matrice distorsion focalisée déterminée à une profondeur donnée et correspondant à une ligne de l'image 83. Dans l'expérience sans aberrations, toute l'énergie réfléchie par le milieu apparaît sur la ligne centrale de la matrice distorsion ($\mathbf{r_{in}} = \mathbf{r_{out}}$) : la largeur $\delta$ de la fonction d'étalement est proche de la limite imposée par la diffraction ($\delta \sim \lambda z/D$, avec D la taille du réseau de transducteurs) ce qui explique l'excellente qualité en terme de résolution et de contraste de l'image échographique. Au contraire, en présence de la couche d'eau aberrante, l'énergie réfléchie s'étale en dehors de la ligne centrale. La dégradation de la réponse impulsionnelle spatiale implique une image échographique nettement moins bien résolue. Cet exemple montre comment la matrice distorsion « plan focal » permet de quantifier la qualité de la focalisation dans le milieu, indépendamment d'une analyse qualitative de l'image échographique.

Pour aller plus loin dans l'analyse de la matrice distorsion $\mathbf{D_{\theta r}}$, on peut avantageusement considérer d'une part le cas d'une réflexion par l'échantillon principalement spéculaire et d'autre part le cas d'une réflexion principalement diffuse. En pratique, on peut se trouver dans des cas intermédiaires qui combinent réflexion diffuse et réflexion spéculaire. Dans les deux cas, la matrice distorsion $\mathbf{D_{\theta r}}$ présente des corrélations entre ses colonnes. Ces corrélations correspondent à la répétition du même motif de distorsion pour les fronts d'onde issus du même domaine d'isoplanétisme. Pour un échantillon induisant une réflexion diffuse, par exemple de type speckle (répartition aléatoire de diffuseurs non résolus), on va pouvoir étudier la matrice de corrélation normalisée de la matrice distorsion $\mathbf{D_{\theta r}}$ pour extraire de manière plus efficace ces mêmes corrélations. Dans tous les cas, comme cela sera décrit plus en détails par la suite, la recherche des invariants de la matrice $\mathbf{D_{\theta r}}$, par exemple au moyen d'une décomposition en valeurs singulières (SVD), permet d'extraire la transmittance complexe de l'aberrateur pour chaque point du plan focal et ainsi corriger de manière optimale les aberrations dans chaque domaine d'isoplanétisme contenu dans la zone insonifiée.

Dans l'hypothèse d'un échantillon induisant une réflexion diffuse, on décrit ci-dessous des exemples d'utilisation de la matrice distorsion pour déterminer une cartographie d'une ou plusieurs lois d'aberrations dans la base d'observation, notamment pour établir une cartographie de la réflectivité locale de la zone insonifiée.

Pour cela, on recherche les invariants de la matrice distorsion, autrement dit les lois d'aberrations invariantes spatialement sur les domaines d'isoplanétisme de la zone insonifiée. Différentes méthodes sont connues de l'homme du métier pour rechercher les invariants d'une telle matrice, comme par exemple la décomposition en valeurs singulières (ou « SVD » selon l'abréviation anglo-saxonne « Singular Value Décomposition ») ou l'analyse en composantes principales (« PCA » selon l'abréviation anglo-saxonne « Principal Component Analysis »).

La décomposition en valeurs singulières est un outil puissant pour extraire les corrélations entre les lignes ou les colonnes d'une matrice. Mathématiquement, la SVD de la matrice $\mathbf{D_{\theta r}}$, de taille N × M, s'écrit de la manière suivante :

$$\mathbf{D_{\theta r}} = \mathbf{U} \times \mathbf{\Sigma} \times \mathbf{V}^{\dagger} \quad (11)$$

$\mathbf{U}$ et $\mathbf{V}$ sont des matrices unitaires de taille N × M dont les colonnes $\mathbf{U_i}$ et $\mathbf{V_i}$ correspondent aux vecteurs propres en sortie et en entrée. Chaque vecteur propre en sortie $\mathbf{U_i}$ est défini dans le plan de Fourier repéré par l'angle $\theta_{out}$. Chaque vecteur propre en entrée $\mathbf{V_i}$ est donc défini dans le plan focal repéré par le vecteur $\mathbf{r_{in}}$. $\Sigma$ est une matrice de taille N × M dont seuls les éléments diagonaux sont non nuls :

$$\mathbf{\Sigma} = \mathrm{diag}(\sigma_1, \sigma_2, \cdots, \sigma_{N^2}) \quad (12)$$

Les éléments diagonaux de la matrice $\Sigma$ sont les valeurs singulières $\sigma_i$ de la matrice $\mathbf{D}_{\theta r}$ qui sont réelles, positives et classées dans un ordre décroissant :

$$\sigma_1 > \sigma_2 > \cdots > \sigma_{N^2} \qquad (13)$$

Les coefficients $D(\theta_{out}, \mathbf{r}_{in})$ de la matrice $\mathbf{D}_{\theta r}$ s'écrivent donc comme la somme suivante :

$$D(\theta_{out}, \mathbf{r}_{in}) = \sum_{i=1}^{L} \sigma_i U_i(\theta_{out}) V_i^*(\mathbf{r}_{in}) \qquad (14)$$

avec $L = \min (M, N)$.

La SVD décompose principalement une matrice en deux sous-espaces : un sous-espace signal (une matrice caractérisée par d'importantes corrélations entre ses lignes et/ou ses colonnes) et un sous-espace bruit (une matrice aléatoire sans corrélation entre ses lignes et colonnes). Le sous-espace signal est associé aux valeurs singulières les plus grandes alors que le sous-espace bruit est associé aux valeurs singulières les plus faibles. D'une part, la SVD de **D** va donc permettre de filtrer le sous-espace bruit qui contient à la fois le bruit expérimental et la contribution incohérente du champ réfléchi induit par les évènements de diffusion multiple. D'autre part, chaque état singulier du sous-espace signal va permettre d'extraire suivant le vecteur propre en sortie $\mathbf{U_i}$ la distorsion subie par l'onde dans la base de correction des aberrations pour chaque domaine d'isoplanétisme de l'image. En particulier, dans le cas d'un seul domaine d'isoplanétisme, on peut montrer que le premier vecteur propre en sortie $\mathbf{U_1}$ donne directement la transmittance complexe A de l'aberrateur entre le plan de correction et le plan focal :

$$U_1(\theta_{out}) = A(\theta_{out}) \qquad (15)$$

Les figures suivantes illustrent différentes applications de la matrice distorsion, qu'elle soit définie dans les bases focales ou entre la base focale et la base de correction des aberrations.

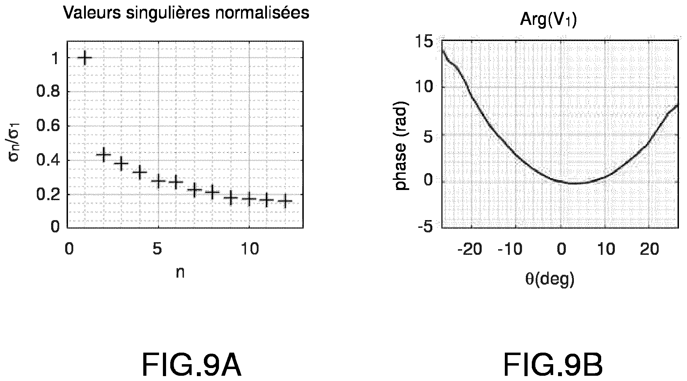

Les FIGS. 9A et 9B montrent le résultat de la SVD appliquée à la matrice distorsion $\mathbf{D}_{\theta r}$ représentée sur l'image 84 de la FIG. 8. Le spectre des valeurs singulières $\sigma_i$ de $\mathbf{D}_{\theta r}$ (FIG. 9A) montre une domination de la première valeur singulière $\sigma 1$. Cela indique que nous sommes en présence d'un seul domaine d'isoplanétisme. Le premier vecteur propre $\mathbf{U_1}$ (FIG. 9B) associé montre une phase parabolique, caractéristique d'un défaut de mise au point expliqué par la présence de la couche d'eau dans lequel la vitesse du son (1490 m/s) est sensiblement différente par rapport à celle du phantom (1540 m/s).

Pour corriger la matrice de réflexion large bande $\mathbf{R_{rr}}$ (71, FIG. 7A), on commence dans cet exemple à projeter la matrice $\mathbf{R_{rr}}$ dans le plan de correction des aberrations (ici le plan de Fourier) :

$$\mathbf{R_{\theta\theta}} = {}^{t}\mathbf{G'_0}(\omega_c) \times \mathbf{R_{rr}} \times \mathbf{G'_0} \qquad (16)$$

La correction des aberrations s'effectue ensuite par application du conjugué en phase de $\mathbf{U_1}$ en entrée et sortie de la matrice $\mathbf{R_{\theta\theta}}$ :

$$\mathbf{R'_{\theta\theta}} = \exp(j \times \arg\{\mathbf{U_1^*}\}) \circ \mathbf{R_{\theta\theta}} \circ \exp(j \times \arg\{\mathbf{U_1^\dagger}\}) \qquad (17)$$

où $\mathbf{R'_{\theta\theta}}$ est la matrice de réflexion corrigée et la fonction $\arg\{...\}$ désigne la phase du vecteur entre accolades. La relation (18) se traduit pour les coefficients matriciels de la façon suivante :

$$R'(\theta_{out}, \theta_{in}) = U_1^*(\theta_{out}) R(\theta_{out}, \theta_{in}) U_1^*(\theta_{in}) \qquad (18)$$

Physiquement, l'opération de conjugaison de phase consiste à réémettre un front d'onde modulé par une phase opposée à celle de la distorsion mesurée et à appliquer une correction similaire en sortie. Cette opération permet alors de compenser parfaitement les distorsions de phase cumulées par l'onde lors de son trajet à l'aller et au retour. Une matrice corrigée $\mathbf{R'_{rr}}$ peut alors être déduite de $\mathbf{R'_{\theta\theta}}$ par changement de base en entrée et sortie depuis le plan pupille vers le plan focal. Une image confocale corrigée I' peut être déduite de la diagonale ($\mathbf{r_{in}}$ = $\mathbf{r_{out}}$) de la matrice $\mathbf{R}'_{\mathbf{rr}}$ :

$$I'(\mathbf{r_{in}}) = R'(\mathbf{r_{in}}, \mathbf{r_{in}}) \qquad (19)$$

I'($\mathbf{r_{in}}$) est alors un estimateur fidèle de la réflectivité $\rho(\mathbf{r_{in}})$ de l'échantillon.

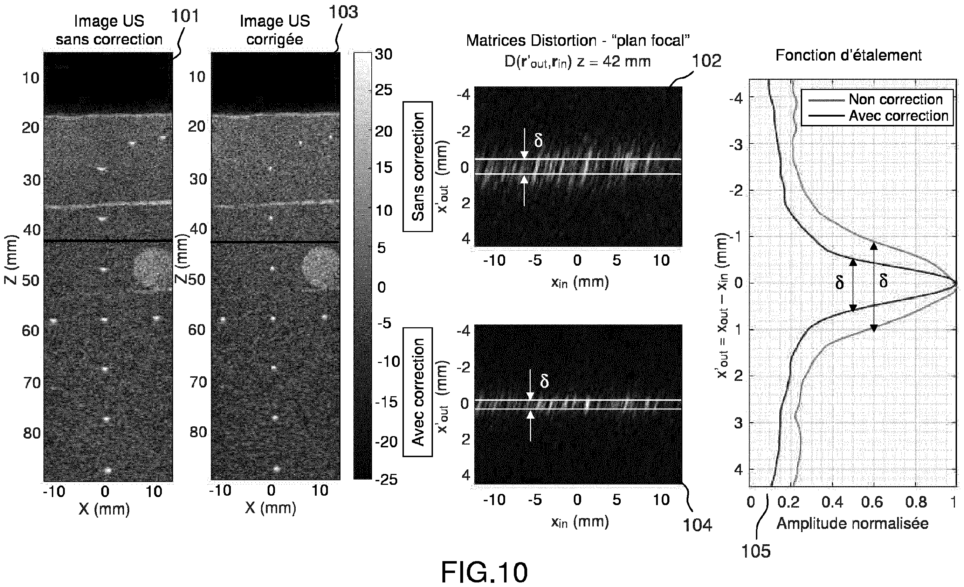

La FIG. 10 illustre les bienfaits de cette correction en comparant l'image échographique aberrée 101 et l'image échographique 103 obtenue suivant la correction décrite par l'équation (17). On observe un gain qualitatif entre ces deux images notamment grâce aux cibles échogènes qui apparaissent bien plus contrastées et mieux résolues après correction des aberrations.

En échographie, on n'a toutefois pas la plupart du temps de cibles échogènes pour juger de la résolution de l'image. Pour quantifier cette dernière, on peut avoir recours à la matrice distorsion focalisée. Celle déduite de la matrice de réflexion de départ, $\mathbf{D_{rr}}$, est présentée sur l'image 102 à une profondeur particulière. Celle déduite de la matrice de réflexion corrigée, $\mathbf{D}'_{\mathbf{rr}}$, est présentée sur l'image 104 à la même profondeur. Dans le deuxième cas, l'énergie est bien plus concentrée autour de la ligne centrale de la matrice distorsion focalisée que dans le premier cas.

A partir de la matrice distorsion focalisée, on peut également déterminer la fonction d'étalement. Cette dernière correspond à la transformée de Fourier spatiale de la loi d'aberration mesurée dans le plan de correction des aberrations. Elle est invariante spatialement sur chaque domaine d'isoplanétisme. Elle peut être également obtenue à partir de la décomposition en valeurs singulières de la matrice distorsion focalisée. Si la matrice $\mathbf{G}'_0$ est unitaire (ce qui est le cas si les bases de Fourier et de focalisation sont conjuguées l'une de l'autre), alors la matrice $\mathbf{D_{rr}}$ présente une décomposition en valeurs singulières similaire à $\mathbf{D_{\theta r}}$. Les vecteurs propres en sortie, que l'on nommera $\mathbf{W_i}$, sont directement reliés aux vecteurs propres $\mathbf{U_i}$ par une simple transformée de Fourier :

$$\mathbf{W_i} = \widehat{\mathbf{G}}_0'^{*}(\omega_c) \times \mathbf{U_i} \quad (20)$$

Le schéma 105 de la FIG. 10 compare le module des fonctions d'étalement ainsi obtenues avant et après correction. Le gain en termes de résolution est évident et la limite de diffraction est atteinte après correction des aberrations.

Dans l'expérience réalisée, les aberrations mesurées ne dépendent pas de la fréquence car les vitesses du son dans le phantom et dans l'eau varient peu sur la bande de fréquence étudiée. En pratique, ce n'est pas toujours le cas et une analyse fréquentielle de la matrice distorsion peut s'avérer judicieuse pour déterminer le filtre adaptatif spatio-fréquentiel (ou de manière équivalente spatio-temporel) corrigeant de manière optimale les aberrations. La matrice distorsion D peut en effet être étudiée sur différentes bandes spectrales $\Delta\omega_i$ centrées autour de fréquences centrales distinctes $\omega_{c,i}$. Une loi d'aberration $\mathbf{U_1}(\omega_{c,i})$ pourra être extraite sur chacune de ces bandes spectrales et une matrice de réflexion corrigée $\mathbf{R}'_{\mathbf{rr}}(\omega_{c,i})$ pourra en être déduite [équation (17)]. Une somme cohérente des matrices de réflexion corrigées de manière indépendante sur chacune des bandes spectrales $\Delta\omega_i$ permet d'accéder à la matrice de réflexion corrigée ultra large bande $\mathbf{R}'_{\mathbf{rr}}$ :

$$\mathbf{R}'_{\mathbf{rr}} = \sum_{\omega_{c,i}} \mathbf{R}'_{\mathbf{rr}}(\omega_{c,i}) \qquad (21)$$

Cette correction fréquentielle des aberrations est équivalente en formation de voies à la convolution des signaux focalisés émis et mesurés par le filtre spatio-temporel $\mathbf{U_1}(\tau)$, où

$$\mathbf{U_1}(\tau) = \sum_{\omega_{c,i}} \mathbf{U_1}(\omega_{c,i}) e^{j\omega_{c,i}\tau} \qquad (22)$$

Jusqu'à maintenant, nous nous sommes placés dans le cas d'une couche aberrante invariante par translation, ne générant ainsi qu'un seul domaine d'isoplanétisme. Nous décrivons maintenant un deuxième exemple d'utilisation de la matrice distorsion dans le cas d'un aberrateur volumique et non invariant par translation, générant ainsi plusieurs domaines d'isoplanétisme.

Dans ce cas, une approche itérative (post-traitement) de la correction des aberrations est privilégiée. L'étape #0 du processus consiste à corriger la matrice de réflexion large bande $\mathbf{R}_{\theta r}$ en sortie par le conjugué de la phase du premier vecteur propre $\mathbf{U}_1$ de la matrice distorsion $\mathbf{D}_{ur}$ :

$$\mathbf{R}_{\theta r}^{(1)} = \exp(j \times \arg\{\mathbf{U}_1^*\}) \circ \mathbf{R}_{\theta r} \qquad (23)$$

où $\mathbf{R}_{\theta r}^{(1)}$ est la matrice corrigée résultante . Cette étape initiale permet d'effectuer une correction globale des aberrations sur l'ensemble de l'image.

L'étape #1 consiste à recalculer une nouvelle matrice distorsion $\mathbf{D}_{ru}^{(1)}$ déduite de $\mathbf{R}_{ru}^{(1)}$ définie cette fois-ci entre le plan de Fourier en entrée et le plan focal en sortie. La nature aléatoire de l'objet rend plus judicieuse l'étude de la matrice de corrélation de $\mathbf{D}_{ru}^{(1)}$ dans le plan de Fourier, à savoir $\mathbf{B}^{(1)} = {}^t\mathbf{D}_{r\theta}^{(1)}\mathbf{D}_{r\theta}^{(1)*}$ . Une décomposition en valeurs singulières de la phase de cette matrice $\mathbf{B}^{(1)}$, $\exp[j\arg\{\mathbf{B}^{(1)}\}]$, donne un nouvel ensemble de vecteurs propres $\mathbf{U}_i^{(1)}$ associés à chaque domaine d'isoplanétisme de l'image. La matrice de réflexion correspondante peut donc être corrigée cette fois-ci en entrée :

$$\mathbf{R}_{r\theta}^{(2)} = \mathbf{R}_{r\theta}^{(1)} \circ \exp\left(-j\arg\left\{\mathbf{U}_i^{(1)}\right\}\right) \qquad (24)$$

Les étapes suivantes consistent à reproduire le même processus en alternant correction des aberrations résiduelles en sortie (itérations paires) et entrée (itérations impaires). En revanche, à chaque étape, la correction s'effectue toujours avec le premier vecteur propre $\mathbf{U}_1^{(n)}$ de la phase de la matrice de corrélation, $\exp[j\arg\{\mathbf{B}^{(n)}\}]$, de la matrice distorsion dans le plan pupille. Le choix du domaine d'isoplanétisme est en effet réalisé à l'étape #1. Suivant que la correction soit en sortie ou en entrée, la matrice de corrélation dans le plan pupille $\mathbf{B}^{(n)}$ est donnée par :

$\mathbf{B}^{(n)} = \mathbf{D}_{\theta r}^{(n)}\mathbf{D}_{\theta r}^{(n)\dagger}$ pour n pair (sortie) et $\mathbf{B}^{(n)} = {}^t\mathbf{D}_{r\theta}^{(1)}\mathbf{D}_{r\theta}^{(1)*}$ pour n impair (entrée). A chaque étape du processus, une image du champ de vision peut être déduite de la diagonale de la matrice de réflexion $\mathbf{R}_{rr}^{(n)}$ exprimée dans le plan focal. En pratique, quelques itérations suffisent à obtenir une correction optimale pour le domaine d'isoplanétisme sélectionnée. Une image de l'ensemble du champ de vision peut ensuite être obtenue en combinant les corrections déterminées pour chaque domaine d'isoplanétisme.

La FIG.11 illustre les bienfaits de la méthode selon la présente description au moyen d'une expérience sur un phantom de sein générant plusieurs domaines d'isoplanétisme et comportant des micro calcifications entre 20 et 25 mm de profondeur. Sur la FIG. 11 est représentée une image échographique conventionnelle 111, une image échographique 112 après correction des aberrations à l'aide du premier vecteur propre $\mathbf{U}_1^{(1)}$ de la matrice de corrélation normalisée $\exp[j\arg\{\mathbf{B}^{(1)}\}]$, et un zoom 113 sur une partie de l'image échographique précédente. Est également représentée une image échographique 116 après correction des aberrations à l'aide du second vecteur $\mathbf{U}_2^{(1)}$ , et sur l'image 117, un zoom sur une partie de l'image échographique précédente. On observe à partir de ces images que le premier vecteur propre $\mathbf{U}_1^{(1)}$ est associé au domaine d'isoplanétisme contenant les microcalcifications entre 20 et 25 mm de profondeur. L'image échographique (112) est en effet plus contrastée et mieux résolue à cette profondeur. Au contraire, le second vecteur propre $\mathbf{U}_2^{(1)}$ corrige de manière optimale l'image (117) à de plus faibles profondeurs (entre 10 et 15 mm).

La connaissance des lois d'aberrations en chaque point de l'échantillon peut non seulement être mise à profit pour l'imagerie mais également pour focaliser physiquement les ondes ultrasonores en n'importe quel point de l'échantillon. Par exemple, sur le dispositif expérimental de la FIG. 2, il peut s'agir d'appliquer au réseau de transducteurs une convolution du signal focalisé initial par un filtre spatio-temporel déduit des vecteurs propres de la matrice distorsion. En présence d'une seule aire d'isoplanétisme, il s'agira de considérer la transformée de Fourier du premier vecteur propre $U_1$ [équation (22)]. Notons que si la loi d'aberration est stable fréquentiellement, le filtre spatio-temporel consistera simplement en l'application d'une loi de retard $\Delta t$ directement proportionnelle à la phase du vecteur propre $U_1$ dans la base des transducteurs

$$\Delta t(\mathbf{u}) = -\arg\{U_1(\mathbf{u})\}/\omega_c \qquad (25)$$

En présence de plusieurs aires d'isoplanétisme, la détermination des lois d'aberrations s'effectue au moyen d'un processus itératif (cf paragraphe précédent). Il s'agira d'accumuler suivant un vecteur $\mathbf{W}$ l'ensemble des corrections d'aberrations obtenues en entrée de l'échantillon :

$$\mathbf{W} = \exp\left(-j\left[\arg\left\{\mathbf{U_i^{(1)}}\right\} + \sum_{n=1}\arg\left\{\mathbf{U_1^{(2n+1)}}\right\}\right]\right) \qquad (26)$$

En régime de réflexion spéculaire et dans le cas d'une image échographique contenue dans un seul domaine d'isoplanétisme, on peut montrer que le premier vecteur propre en sortie $\mathbf{U_1}$ de la matrice distorsion donne la distorsion induite par l'aberrateur cumulée sur l'aller et le retour :

$$U_1(\theta_{out}) = A(\theta_{out})A(\theta_{in})\delta(\theta_{out} + \theta_{in}) \qquad (27)$$

avec $A(\theta_{out})$ et $A(\theta_{in})$ les distorsions subies par le front d'onde à l'aller et au retour et projetées dans le plan de Fourier. La distribution de Dirac $\delta$ dans l'équation précédente traduit le fait, qu'en régime de réflexion spéculaire, une onde plane avec un angle d'incidence $\theta_{in}$ se réfléchit en une onde plane avec un angle $\theta_{out} = -\theta_{in}$ en sortie. Par ailleurs, on peut montrer que le vecteur propre en entrée $\mathbf{V_1}$ donne quant à lui directement accès à la réflectivité $\rho$ de l'objet :

$$V_1(\mathbf{r_{in}}) = \rho(\mathbf{r_{in}}) \qquad (28)$$

La matrice de réflexion peut être corrigée des aberrations en lui appliquant une seule fois en entrée ou en sortie le conjugué en phase du vecteur propre $\mathbf{U_1}$ :

$$\mathbf{R'_{ur}} = \exp(-j \times \arg\{\mathbf{U_1}\}) o \mathbf{R_{ur}} \qquad (29)$$

Dans le cas d'une image échographique contenant plusieurs un nombre P>1 de domaines d'isoplanétisme, la matrice distorsion est de rang P. Les vecteurs propres en entrée $\mathbf{V_i}$ décomposent l'objet dans le plan focal sur différents domaines d'isoplanétisme et sont associés à des lois d'aberration $\mathbf{U_i}$ différentes dans le plan de Fourier. La combinaison linéaire des modules des vecteurs propres $\mathbf{V_i}$ pondérés par les valeurs propres $\sigma_i^2$ associées donne finalement accès à une image du champ de vision corrigée des aberrations induites en amont

$$|\rho(\mathbf{r_{in}})|^2 = \sum_{i=1}^P \sigma_i^2 |\mathbf{V_i}(\mathbf{r_{in}})|^2 \qquad (30)$$

Cependant, un réflecteur n'est jamais parfaitement spéculaire et sa composante diffuse ne sera alors pas corrigée de manière optimale par l'équation (29). Par ailleurs, un réflecteur spéculaire peut induire des réflexions multiples entre ses interfaces susceptibles de brouiller l'image échographique. Il est donc nécessaire de pouvoir séparer les composantes spéculaire et diffuse du champ réfléchi par le milieu. Selon un ou plusieurs exemples de réalisation, le procédé de caractérisation comprend donc également l'identification et/ou la suppression de la composante spéculaire du champ réfléchi et/ou des réflexions multiples induites entre le réseau de transducteurs et les différentes interfaces ou couches du milieu hétérogène. A cette fin, la matrice distorsion peut être projetée dans la base de correction des aberrations à la fois en entrée et en sortie. Une matrice distorsion « plan de Fourier » $\mathbf{D}_{\theta\theta}$ peut être obtenue à partir de la matrice distorsion exprimée dans le plan d'observation $\mathbf{D}_{\theta\mathbf{r}}$ par le changement de base suivant :

$$\mathbf{D}_{\theta\theta} = \mathbf{D}_{\theta\mathbf{r}} \, {}^{t}\mathbf{G}_{0}'(\omega_c) \qquad (31)$$

L'équation précédente se réécrit donc en terme de coefficients matriciels de la manière suivante:

$$D(\theta_{out}, \theta'_{in}) = \sum_{\mathbf{r_{in}}} D(\theta_{out}, \mathbf{r_{in}}) \exp\left[jk\left(z_{in}\cos\theta'_{in} + x_{in}\sin\theta'_{in}\right)\right] = R(\theta_{out}, \theta_{in} + \theta_{out}) \quad (32)$$

Comme illustré sur la FIG. 13C, les composantes spéculaires et multiplement réfléchies apparaissent pour des couples précis d'angle incident et réfléchi, $\theta_{in}$ et $\theta_{out}$, tel que

$$\theta_{in} + \theta_{out} = \Delta\theta \qquad (33)$$

où $\Delta\theta$ correspond à l'angle entre le réflecteur spéculaire et le réseau de transducteurs. $\Delta\theta$ est par exemple nul si le réflecteur spéculaire est parallèle au réseau de transducteurs. Les composantes spéculaires et multiplement réfléchies peuvent donc être aisément filtrées et seule la composante diffuse (speckle) du champ réfléchi pourra être conservée pour déterminer de manière précise les aberrations induites par la plaque de plexiglas et les corriger. Cette discrimination de la composante diffuse permet ensuite d'accéder directement aux lois d'aberration à appliquer en entrée et sortie pour corriger la matrice de réflexion et obtenir une image optimale du milieu [équation (17)], ce qui est n'est pas possible si la composante spéculaire prédomine [équation (29)]. En outre, le filtrage de la matrice distorsion dans le plan de Fourier permet d'éliminer les réflexions multiples qui polluent par exemple les images échographiques à faible profondeur (échos multiples entre la sonde et les couches superficielles du corps humain).

Les FIGS. 12A - 12C illustrent l'utilisation de la matrice distorsion pour le filtrage des réflexions multiples et son application ensuite à la correction des aberrations et à une cartographie de la vitesse du son. La FIG. 12A représente le schéma de la configuration expérimentale, à savoir une plaque de plexiglas 121 placée entre la sonde échographique 41 et le phantom 20. L'image échographique correspondante 122 est construite à l'aide d'un modèle de vitesse homogène (c=1800 m/s). Cette image est fortement dégradée par les réflexions multiples et les aberrations induite par la plaque de plexiglas. La FIG. 12B représente différentes formes de la matrice distorsion pour une profondeur de l'image échographique (z=25 mm). L'image 124 représente le module de la matrice de distorsion focalisée avec une fonction d'étalement particulièrement dégradée par la présence de la plaque de plexiglas. L'image 125 montre la matrice distorsion dans le plan de Fourier. On voit clairement apparaître une forte composante spéculaire pour $\theta_{in}$ + $\theta_{out}$ = 0. L'image 126 montre la même matrice distorsion après application d'un filtre spéculaire qui consiste à éliminer toutes les composantes du champ pour lesquelles $|\theta_{in} + \theta_{out}| < 1/60$ rad. L'image 127 montre la matrice distorsion focalisée après filtrage de la composante spéculaire. La comparaison avec l'image 126 (avant filtrage) montre une matrice distorsion, certes fortement aberrée, mais présentant une allure aléatoire typique du régime diffus (speckle). La ligne centrale des matrices distorsion ainsi filtrées donne l'image échographique 123 de la FIG. 12 A. La comparaison avec l'image échographique brute 122 montre que le filtre appliqué a réussi à éliminer avec succès les réflexions multiples induites par la plaque de plexiglas. Même si l'image 123 souffre toujours d'aberrations, chacune des cibles du phantom est désormais visible, ce qui n'était pas le cas sur l'image initiale 122.

Selon un ou plusieurs exemples de réalisation, la détermination d'au moins une cartographie d'un paramètre physique dudit milieu hétérogène comprend la détermination de la vitesse du son dans la zone insonifiée. Il s'agit pour cela d'étudier par exemple l'évolution de la première valeur singulière de la matrice distorsion en fonction du modèle de vitesse utilisé pour modéliser la matrice de référence. Le modèle de vitesse optimal est celui qui maximise la première valeur singulière de la matrice distorsion. Une alternative est d'étudier la matrice distorsion focalisée. Celle-ci permet en effet d'étudier l'évolution de la fonction d'étalement en fonction du modèle de vitesse utilisé pour le calcul de la matrice de référence. Le modèle de vitesse optimal est celui qui minimise la largeur de la fonction d'étalement normalisée par la longueur d'onde.

Ainsi, la FIG. 13 illustre un exemple d'utilisation de la matrice distorsion pour une mesure quantitative de la vitesse du son. Sur la FIG. 13 est représentée l'image échographique 131 du phantom déjà représenté sur l'image 81 (FIG. 8) en l'absence d'aberrations. L'image 132 montre un exemple de matrice distorsion focalisée pour une ligne de l'image et un modèle homogène de vitesse (c=1540 m/s) et l'image 133 montre la matrice distorsion correspondante entre le plan focal en entrée et le plan de Fourier. Le schéma 134 illustre la largeur $\delta$ de la fonction d'étalement normalisée par la longueur d'onde $\lambda$ en fonction de la vitesse des ondes c, et le schéma 135 montre la première valeur singulière

normalisée, $\tilde{\sigma}_1 = \sigma_1 / \sum_{i=1}^{N} \sigma_i$ , de la matrice distorsion en fonction de cette même vitesse.

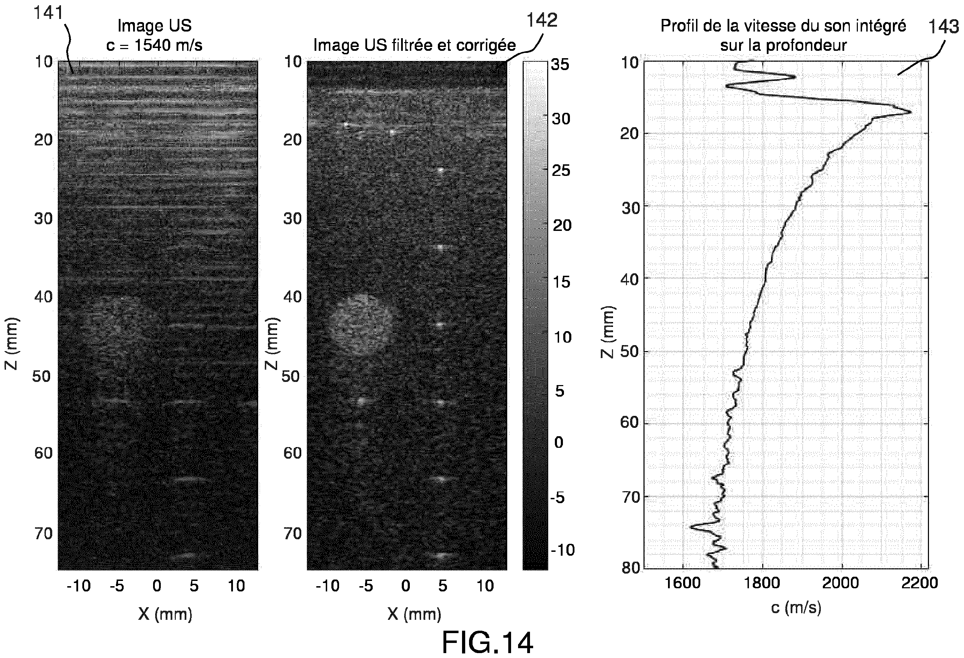

Le ratio $\delta\lambda$ sur le schéma 134 montre clairement au minimum autour de c=1539 m/s alors que la vitesse donnée par le constructeur de phantom est de 1540 m/s. Un modèle de vitesse adéquat implique une focalisation optimale des ondes ultrasonores à l'émission et à la réception et une fonction d'étalement d'autant mieux résolue. La matrice distorsion focalisée fournit donc un critère pertinent pour une mesure quantitative de la vitesse du son dans le phantom. De la même manière, la première valeur singulière $\tilde{\sigma}_1$ de la matrice distorsion sur le schéma 135 montre un maximum autour d'une vitesse c=1542 m/s. Là encore, la vitesse mesurée est proche de celle donnée par le constructeur. En effet, plus le modèle de vitesse utilisé pour le calcul de la matrice distorsion est proche de la réalité, plus la matrice distorsion s'approche d'une matrice singulière de rang 1. Cette expérience montre comment la matrice distorsion offre différents critères pour une mesure quantitative de la vitesse du son. Ici, pour la preuve de concept, nous nous sommes limités au cas d'un milieu homogène mais, bien sûr, nous pourrions potentiellement utiliser la matrice distorsion et ses paramètres $\delta\lambda$ ou $\tilde{\sigma}_1$ comme retour d'information afin de construire une cartographie locale de la vitesse du son dans le milieu. Une première étape en ce sens sera présentée sur la FIG. 14.

Au-delà de la réflectivité du milieu ou de la connaissance des lois d'aberrations en chaque point d'un échantillon, la matrice distorsion permet de réaliser une tomographie 3D de l'indice optique de l'échantillon étudié. A partir de la matrice distorsion « plan focal » $\mathbf{D_{rr}}$, nous avons accès à la fonction d'étalement dans l'échantillon ainsi qu'aux domaines d'isoplanétisme. Au lieu de corriger directement les images, l'idée est de faire évoluer le milieu de référence sur lequel est basé le calcul de la matrice distorsion à partir de la matrice de réflexion. Cela amène à une approche itérative de la matrice distorsion dans laquelle on fait évoluer le milieu de référence vers un modèle plus complexe (e.g. milieu multi-couches) de telle sorte à réduire l'étendue spatiale de la fonction d'étalement et à augmenter la taille des domaines d'isoplanétisme. En allant de plus en plus profond dans l'échantillon, on peut reconstruire progressivement une carte tridimensionnelle de la vitesse du son, tout en obtenant une image de la réflectivité du milieu d'autant plus fidèle que le milieu de référence sera proche de la réalité.

La FIG. 14 illustre un exemple d'utilisation de la matrice distorsion pour établir une cartographie de la vitesse du son dans le milieu. La FIG. 14A représente une image échographique conventionnelle 141 du phantom à travers la plaque de plexiglas pour un modèle de vitesse homogène (c=1540 m/s). Cette image échographique est de piètre qualité, du fait des aberrations et des réflexions multiples induites par la plaque de plexiglas. Au contraire, la réflectivité du phantom est retrouvée avec succès sur l'image échographique 142. Cette dernière a été construite en filtrant tout d'abord les réflexions multiples de l'image (FIG. 12) puis en optimisant le modèle de vitesse pour chaque ligne de l'image (FIG. 13). Ces opérations permettent l'obtention d'une résolution optimale seulement limitée par la diffraction. Seule les basses fréquences spatiales des cibles sont mal recombinées du fait du filtrage de la composante spéculaire. Le schéma 143 montre le profil obtenu pour la vitesse du son intégrée sur la profondeur. Cette vitesse augmente fortement à partir de l'entrée dans le couche de plexiglas (z=14 mm) avant de diminuer progressivement à sa sortie (z=17 mm). Un algorithme permet ensuite de résoudre le problème inverse consistant à déduire de ce profil de vitesse intégré le profil exact de la vitesse du son en fonction de la profondeur. La vitesse du son mesurée dans le plexiglas est de 2700 m/s et celle dans le phantom est, comme attendu, de 1540 m/s.

Selon un ou plusieurs exemples de réalisation, la détermination d'au moins une cartographie d'un paramètre physique dudit milieu hétérogène comprend la détermination d'un taux de diffusion multiple dans la zone insonifiée. Il s'agit pour cela d'étudier par exemple la matrice distorsion focalisée dont on aura au préalable corrigé les aberrations. Le rapport entre la moyenne de l'intensité incohérente (diffusion multiple) obtenue au-delà de la tâche focale et l'intensité au point de focalisation (ligne centrale de la matrice distorsion) donne accès à un taux local de diffusion multiple.

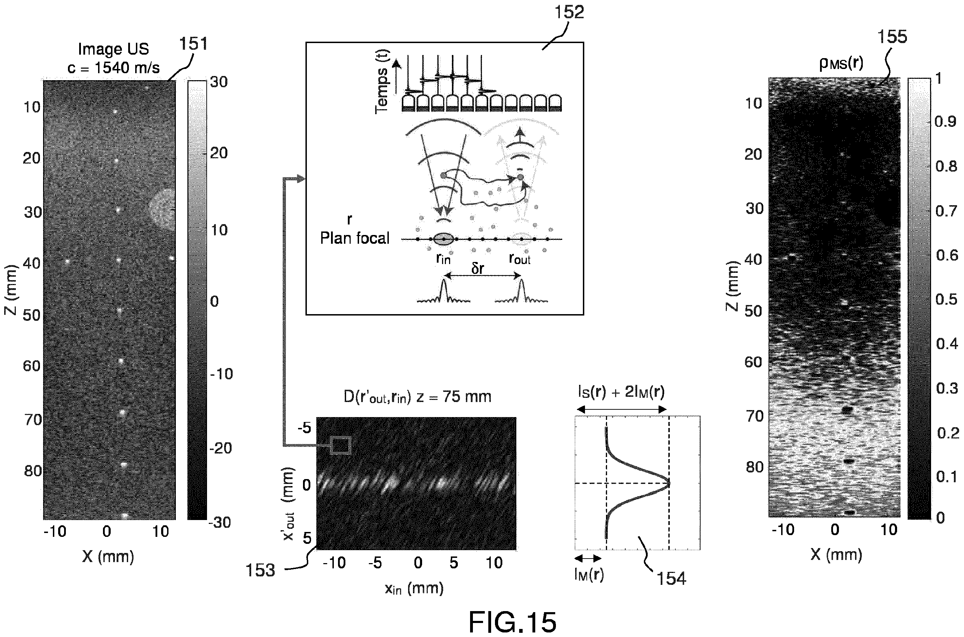

La FIG. 15 illustre l'intérêt de la matrice distorsion pour la quantification locale de la diffusion multiple. Sur la FIG. 15 est représentée une image échographique 151 du phantom standard. Le schéma 152 explique la nature des trajets de diffusion multiple se manifestant comme un champ incohérent dans la matrice distorsion. Ceux-ci se produisent en amont du plan focal puisqu'ils présentent les mêmes temps de vol que les ondes simplement diffusées dans le plan focal. Une matrice distorsion focalisée est présentée sur l'image 153 et correspond à une ligne de l'image échographique (z=75 mm). Sa ligne centrale ($\mathbf{r_{in}} = \mathbf{r_{out}}$) montre bien une surintensité caractéristique de la contribution de diffusion simple. Elle présente toutefois un fond incohérent d'intensité homogène quel que soit la distance $|\mathbf{r_{in}} - \mathbf{r_{out}}|$. Ce fond incohérent peut être soit induit par le bruit des mesures ultrasonores, soit lié à la diffusion multiple. Pour connaître son origine, on peut examiner la propriété de réciprocité spatiale des ondes. Si $R(\mathbf{r_{in}}, \mathbf{r_{out}}) = R(\mathbf{r_{out}}, \mathbf{r_{in}})$, nous avons alors à faire à un signal d'origine physique, donc de diffusion multiple. Dans le cas contraire, cela ne peut être que du bruit.

La matrice distorsion focalisée $\mathbf{D_{rr}}$ donne accès à la fonction d'étalement 154 du système d'imagerie en n'importe quel point du champ de vision. Un taux de diffusion multiple $\gamma(\mathbf{r_{in}})$ peut être mesuré localement à partir du rapport entre le niveau du fond incohérent ($|\mathbf{r_{out}} - \mathbf{r_{in}}| \gg \delta$) et le niveau de signal sur la ligne centrale de $\mathbf{Drr}$ ($\mathbf{r_{out}} = \mathbf{r_{in}}$) :

$$\gamma(\mathbf{r_{in}}) = \frac{I_M(\mathbf{r_{in}})}{I_S(\mathbf{r_{in}})+2I_M(\mathbf{r_{in}})} = \frac{\langle|D(\mathbf{r_{out}}\neq\mathbf{r_{in}},\mathbf{r_{in}})|^2\rangle}{|D(\mathbf{r_{out}}=\mathbf{r_{in}},\mathbf{r_{in}})|^2} \qquad (34)$$

où le symbole $\langle...\rangle$ désigne une moyenne le long de chaque ligne de $\mathbf{D_{rr}}$ en dehors des éléments centraux ($|\mathbf{r_{out}} - \mathbf{r_{in}}| >> \delta$). $I_M(\mathbf{r_{in}}) = \langle|D(\mathbf{r_{out}} \neq \mathbf{r_{in}}, \mathbf{r_{in}})^2\rangle$ est l'intensité de diffusion multiple (fond incohérent) au point $\mathbf{r_{in}}$. $I_S(\mathbf{r_{in}})$ est l'intensité de diffusion simple au point $\mathbf{r_{in}}$. L'équation (34) indique que, sur la ligne centrale ($\mathbf{r_{out}} = \mathbf{r_{in}}$), nous avons la relation suivante: $|D(\mathbf{r_{out}} = \mathbf{r_{in}},\mathbf{r_{in}})|^2 = I_S(\mathbf{r_{in}}) + 2I_M(\mathbf{r_{in}})$. Le facteur 2 provient du phénomène de rétrodiffusion cohérente qui consiste en une surintensité d'un facteur 2 de l'onde rétrodiffusée sur la source virtuelle en $\mathbf{r_{in}}$ pour la contribution de diffusion multiple. Ce phénomène est induit par l'interférence constructive entre des ondes multiplement diffusées ayant suivi la même trajectoire mais dans un sens opposé (chemins réciproques) [A. Aubry et al., Appl. Phys. Lett. 92, 124101, 2008].

L'image 155 de la FIG. 15 montre le taux de diffusion multiple mesuré en chaque point de l'image échographique 151. Aux basses profondeurs, ce taux est non négligeable mais lié à du bruit électronique (non-réciprocité des signaux). Son augmentation aux grandes profondeurs est en revanche bien liée au phénomène de diffusion multiple. Le taux de diffusion multiple dépasse notamment les 50% au-delà de 60 mm de profondeur.

Cette mesure est confirmée de précédentes études réalisées *in-vivo* [A. Aubry et al., J. Acous. Soc. Am. 129, 225-233, 2011]. L'apport de la présente invention réside dans le fait que la matrice distorsion focalisée permet une mesure locale du taux de diffusion multiple alors qu'on n'avait accès jusque-là qu'à une valeur moyennée à chaque temps d'écho ou profondeur [A. Aubry et al., J. Acous. Soc. Am. 129, 225-233, 2011].

En se plaçant à des temps supérieurs au temps balistique [équation (4)], la fonction d'étalement peut également nous permettre de suivre la croissance du halo diffusif au sein du milieu et en tirer une mesure locale des paramètres de transport de l'onde multiplement diffusée (coefficient de diffusion ou libre parcours moyen de transport). L'étude du halo diffusif aux temps courts donne accès à une résolution spatiale bien plus fine que celle obtenue par l'état de l'art en tomographie diffuse [A. Aubry et al., Appl. Phys. Lett. 92, 124101, 2008].

Bien que décrite à travers un certain nombre d'exemples de réalisation détaillés, les procédés et systèmes de caractérisation ultrasonore non invasive comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1.   Procédé de caractérisation ultrasonore non invasive d'un milieu hétérogène, le procédé comprenant :

- une étape de génération, au moyen d'au moins un premier réseau de transducteurs, d'une série d'ondes ultrasonores incidentes dans une zone dudit milieu hétérogène ;
- une étape d'enregistrement d'une matrice de réflexion expérimentale ($\mathbf{R_{ui}(t)}$) définie entre une base d'émission (i) en entrée et la base des transducteurs ($\mathbf{u}$) en sortie ;
- une étape de détermination, à partir de ladite matrice de réflexion expérimentale, d'au moins une première matrice de réflexion ($\mathbf{R_{rr}}(\Delta\omega_1)$) large bande, définie dans une base de focalisation en entrée et en sortie, dans une première bande spectrale ($\Delta\omega_1$);
- une étape de détermination d'une première matrice distorsion ($\mathbf{D_{\theta r}}$, $\mathbf{D_{rr}}$) définie dans ladite première bande spectrale, entre ladite base de focalisation et une base d'observation, ladite première matrice distorsion résultant, directement ou après changement de base, du produit matriciel terme à terme de ladite première matrice de réflexion large bande ($\mathbf{R_{\theta r}}(\Delta\omega_1)$), définie entre ladite base de focalisation et une base de correction des aberrations, avec la matrice conjuguée en phase d'une matrice de réflexion de référence, définie pour un milieu modèle, entre les mêmes bases;
- une étape de détermination à partir de ladite première matrice distorsion, d'au moins une cartographie d'un paramètre physique dudit milieu hétérogène.

2.   Procédé selon la revendication 1, dans lequel la détermination de ladite première matrice de réflexion large bande ($\mathbf{R_{rr}}(\Delta\omega_1)$) comprend :

- un changement de base en entrée et en sortie, à partir de ladite matrice de réflexion expérimentale exprimée dans le domaine fréquentiel ($\mathbf{R_{\theta u}}(\omega)$) pour former une matrice de réflexion ($\mathbf{R_{rr}}(\omega)$)), définie dans le domaine fréquentiel, dans une base de focalisation en entrée et en sortie;
- une sommation cohérente sur ladite première bande spectrale donnée ($\Delta\omega_1$) de ladite matrice de réflexion définie dans une base de focalisation en entrée et en sortie pour former ladite première matrice de réflexion large bande ($\mathbf{R_{rr}}(\Delta\omega_1)$) définie dans une base de focalisation en entrée et en sortie.

3. Procédé selon l'une quelconque des revendications précédentes, dans lequel la détermination de ladite première matrice distorsion comprend :

- un changement de base, en entrée ou en sortie, de ladite première matrice de réflexion large bande ($\mathbf{R_{rr}}$) définie dans une base de focalisation en entrée et en sortie, pour obtenir ladite première matrice de réflexion large bande ($\mathbf{R_{0r}}$) déterminée entre la base de focalisation et la base de correction des aberrations;
- le produit matriciel terme à terme de ladite première matrice de réflexion large bande ($\mathbf{R_{0r}}$) définie entre ladite base de focalisation et la base de correction des aberrations, avec la matrice conjuguée en phase de la matrice de réflexion de référence définie entre les mêmes bases.

4. Procédé selon l'une quelconque des revendications précédentes, dans lequel :

- ladite base d'observation est la base de focalisation ;
- ladite première matrice distorsion est définie dans une base de focalisation en entrée et en sortie, et est obtenue soit directement à partir de ladite première matrice de réflexion large bande ($\mathbf{R_{rr}}$) définie dans une base de focalisation en entrée et en sortie, soit par changement de base à partir de la première matrice distorsion définie entre la base de focalisation et la base de correction des aberrations.

5. Procédé selon la revendication 4, dans lequel la détermination d'au moins une cartographie d'un paramètre physique dudit milieu hétérogène comprend la détermination, à partir de ladite première matrice distorsion définie dans une base de focalisation en entrée et en sortie, et pour au moins un premier domaine d'isoplanétisme identifié, d'au moins une première fonction d'étalement (PSF).

6. Procédé selon l'une quelconque des revendications précédentes, dans lequel la détermination d'au moins une cartographie d'un paramètre physique dudit milieu hétérogène comprend :

- la détermination des invariants dans ladite base de focalisation de ladite première matrice distorsion, afin d'identifier au moins un premier domaine d'isoplanétisme dans ladite base de focalisation ;
- la détermination pour chaque premier domaine d'isoplanétisme identifié, d'une cartographie d'au moins une première loi d'aberration dans ladite base de correction des aberrations.

7. Procédé selon la revendication 6, dans lequel la détermination des invariants de ladite première matrice distorsion comprend une décomposition en valeurs singulières d'au moins l'une des matrices du groupe de matrices comprenant : ladite première matrice distorsion, ladite première matrice distorsion normalisée, une matrice de corrélation normalisée de ladite première matrice distorsion.

8. Procédé l'une quelconque des revendications 6 ou 7, dans lequel la détermination d'au moins une cartographie d'un paramètre physique dudit milieu hétérogène comprend en outre la détermination dans ladite base d'observation d'une première matrice de réflexion large bande corrigée par la ou lesdites première(s) loi(s) d'aberration.

9. Procédé selon la revendication 8, comprenant en outre :

- la détermination d'une matrice distorsion corrigée, définie entre ladite base de focalisation et ladite base de correction des aberrations par le produit matriciel terme à terme de ladite première matrice de réflexion large bande corrigée avec la matrice conjuguée en phase de ladite matrice de réflexion de référence.

10. Procédé selon la revendication 9, comprenant en outre :

- la détermination des invariants dans ladite base de focalisation de ladite matrice distorsion corrigée, afin d'identifier au moins un deuxième domaine d'isoplanétisme dans ledit plan focal ;
- la détermination pour chaque deuxième domaine d'isoplanétisme identifié, d'une cartographie d'une deuxième loi d'aberration dans ladite base de correction.

11. Procédé selon l'une quelconque des revendications précédentes, comprenant en outre :

- une étape de détermination, à partir de ladite matrice de réflexion expérimentale, d'au moins une deuxième matrice de réflexion large bande ($\mathbf{R_{rr}}(\Delta\omega_2)$), définie dans une base de focalisation en entrée et en sortie, dans une deuxième bande spectrale ($\Delta\omega_2$) différente de ladite première bande spectrale ;
- une étape de détermination d'au moins une deuxième matrice distorsion ($\mathbf{D_{\theta r}}(\Delta\omega_2)$, $\mathbf{D_{rr}}(\Delta\omega_2)$) définie dans ladite deuxième bande spectrale entre ladite base de focalisation et ladite base d'observation, ladite deuxième matrice distorsion résultant, directement ou après changement de base, du produit matriciel terme à terme de ladite deuxième matrice de réflexion large bande ($\mathbf{R_{\theta r}}(\Delta\omega_2)$), définie entre ladite base de focalisation et ladite base de correction des aberrations, avec la matrice conjuguée en phase d'une matrice de réflexion de référence, définie pour un milieu modèle, entre les mêmes bases.

**12.** Procédé selon la revendication 11, comprenant en outre :

- la détermination des invariants dans ladite base de focalisation de ladite au moins une deuxième matrice distorsion ($\mathbf{D_{\theta r}}(\Delta\omega_2)$, afin d'identifier au moins un premier domaine d'isoplanétisme dans ledit plan focal ;
- la détermination pour chaque domaine d'isoplanétisme identifié, d'une cartographie d'au moins une première loi d'aberration dans ladite base de correction ;
- la détermination dans ladite base d'observation d'au moins une deuxième matrice de réflexion large bande corrigée par la ou lesdites première(s) loi(s) d'aberration ;
- la sommation de ladite première matrice de réflexion large bande corrigée et de ladite au moins une deuxième matrice de réflexion large bande corrigée pour former une matrice de réflexion corrigée ultra large bande.

**13.** Procédé selon l'une quelconque des revendications précédentes, dans lequel la détermination d'au moins une cartographie d'un paramètre physique dudit milieu hétérogène comprend la détermination de la vitesse du son dans la zone insonifiée.

**14.** Procédé selon l'une quelconque des revendications précédentes, dans lequel la détermination d'au moins une cartographie d'un paramètre physique dudit milieu hétérogène comprend la détermination d'un taux de diffusion multiple dans la zone insonifiée.

**15.** Procédé selon l'une quelconque des revendications précédentes, comprenant en outre l'identification et/ou la suppression des composantes de réflexion spéculaire et/ou de réflexions multiples à partir de ladite première matrice distorsion, exprimée en entrée et en sortie dans la base d'ondes planes.

**16.** Système (40) de caractérisation ultrasonique non invasive d'un milieu hétérogène (20) comprenant :

- Au moins un premier réseau (10) de transducteurs configuré pour générer une série d'ondes ultrasonores incidentes dans une zone dudit milieu hétérogène et enregistrer les ondes ultrasonores rétrodiffusées par ladite zone en fonction du temps;
- une unité de calcul (42), couplée audit au moins un premier réseau de transducteurs, et configurée pour :

  ○ enregistrer une matrice de réflexion expérimentale ($\mathbf{R_{ui}}$ (t)) définie entre une base d'émission (i) à l'entrée et la base des transducteurs (u) en sortie ;
  ○ déterminer, à partir de ladite matrice de réflexion expérimentale, au moins une première matrice de réflexion large bande ($\mathbf{R_{rr}}(\Delta\omega_1)$), définie dans une base de focalisation en entrée et en sortie, dans une première bande spectrale donnée ($\Delta\omega_1$);
  ○ déterminer une première matrice distorsion (Der, $\mathbf{D_{rr}}$) définie dans ladite première bande spectrale, entre ladite base de focalisation et une base d'observation, ladite première matrice distorsion résultant, directement ou après changement de base, du produit matriciel terme à terme de ladite première matrice de réflexion large bande ($\mathbf{R_{\theta r}}(\Delta\omega_1)$), définie entre ladite base de focalisation et une base de correction des aberrations, avec la matrice conjuguée en phase d'une matrice de réflexion de référence, définie pour un milieu modèle, entre les mêmes bases;
  o déterminer à partir de ladite première matrice distorsion, au moins une cartographie d'un paramètre physique dudit milieu hétérogène.

**Patentansprüche**

**1.** Verfahren zur nichtinvasiven Ultraschallcharakterisierung eines heterogenen Mediums, wobei das Verfahren aufweist:

- einen Schritt der Erzeugung einer Reihe von Ultraschallwellen, die in einen Bereich des heterogenen Mediums einfallen, mittels mindestens eines ersten Netzwerks von Wandlern;
- einen Schritt des Aufzeichnens einer experimentellen Reflexionsmatrix ($R_{ui}$ (t)), die zwischen einer Sendebasis (i) am Eingang und der Basis der Wandler (u) am Ausgang definiert ist;
- einen Schritt des Bestimmens, ausgehend von der experimentellen Reflexionsmatrix, mindestens einer ersten breitbandigen Reflexionsmatrix ($R_{rr}$ ($\Delta\omega_1$)), die in einer Fokussierungsbasis am Eingang und am Ausgang definiert ist, in einem ersten Spektralband ($\Delta\omega_1$);
- einen Schritt zur Bestimmung einer ersten Verzerrungsmatrix (Der, Drr), die in dem ersten Spektralband zwischen der Fokussierungsbasis und einer Beobachtungsbasis definiert ist, wobei die erste Verzerrungsmatrix direkt oder nach Änderung der Basis aus dem elementweisen Matrixprodukt der ersten breitbandigen Reflexionsmatrix ($R_{\theta r}$ ($\Delta\omega_1$)), die zwischen der Fokussierungsbasis und einer Aberrationskorrekturbasis definiert ist, mit der phasenkonjugierten Matrix einer Referenzreflexionsmatrix, die für ein Modellmedium definiert ist, zwischen denselben Basen resultiert;
- einen Schritt zur Bestimmung mindestens einer Abbildung eines physikalischen Parameters des heterogenen Mediums aus der ersten Verzerrungsmatrix.

2. Verfahren nach Anspruch 1, wobei die Bestimmung der ersten breitbandigen Reflexionsmatrix ($R_{rr}(\Delta\omega_1)$) Folgendes aufweist:

- eine Änderung der Eingangs- und Ausgangsbasis, ausgehend von der experimentellen, im Frequenzbereich ausgedrückten Reflexionsmatrix ($R_{\theta u}(\omega)$), um eine Reflexionsmatrix ($R_{rr}(\omega)$) zu bilden, die im Frequenzbereich definiert ist, in einer Fokussierungsbasis am Eingang und am Ausgang;
- eine kohärente Summation über das erste gegebene Spektralband ($\Delta\omega_1$) der Reflexionsmatrix, die in einer Fokussierungsbasis am Eingang und am Ausgang definiert ist, um die erste breitbandige Reflexionsmatrix ($R_{rr}(\Delta\omega_1)$) zu bilden, die in einer Fokussierungsbasis am Eingang und am Ausgang definiert ist.

3. Verfahren nach einem der vorhergehenden Ansprüche, wobei die Bestimmung der ersten Verzerrungsmatrix aufweist:

- eine Änderung der Basis, am Eingang oder am Ausgang, der ersten breitbandigen Reflexionsmatrix ($R_{rr}$), die in einer Fokussierungsbasis am Eingang und am Ausgang definiert ist, um die erste breitbandige Reflexionsmatrix ($R_{\theta r}$) zu erhalten, die zwischen der Fokussierungsbasis und der Aberrationskorrekturbasis bestimmt wird;
- das elementweise Matrixprodukt der ersten breitbandigen Reflexionsmatrix ($R_{\theta r}$), die zwischen der Fokussierungsbasis und der Aberrationskorrekturbasis definiert ist, mit der phasenkonjugierten Matrix der Referenzreflexionsmatrix, die zwischen denselben Basen definiert ist.

4. Verfahren nach einem der vorhergehenden Ansprüche, wobei:

- die Beobachtungsbasis die Fokussierungsbasis ist;
- die erste Verzerrungsmatrix in einer Fokussierungsbasis am Eingang und am Ausgang definiert ist und entweder direkt aus der ersten breitbandigen Reflexionsmatrix ($R_{rr}$), die in einer Fokussierungsbasis am Eingang und am Ausgang definiert ist, oder durch Basiswechsel aus der ersten Verzerrungsmatrix, die zwischen der Fokussierungsbasis und der Basis für die Aberrationskorrektur definiert ist, erhalten wird.

5. Verfahren nach Anspruch 4, wobei die Bestimmung mindestens einer Abbildung eines physikalischen Parameters des heterogenen Mediums die Bestimmung mindestens einer ersten Ausbreitungsfunktion (PSF) aus der ersten Verzerrungsmatrix, die in einer Fokussierungsbasis am Eingang und am Ausgang definiert ist, und für mindestens einen ersten identifizierten Isoplanetismusbereich aufweist.

6. Verfahren nach einem der vorhergehenden Ansprüche, wobei die Bestimmung mindestens einer Abbildung eines physikalischen Parameters des heterogenen Mediums aufweist:

- Bestimmen der Invarianten in der Fokussierungsbasis der ersten Verzerrungsmatrix, um mindestens einen ersten Isoplanetismusbereich in der Fokussierungsbasis zu identifizieren;
- Bestimmen für jeden identifizierten ersten Isoplanetismusbereich, eine Abbildung von mindestens einem ersten Aberrationsgesetz in der Aberrationskorrekturbasis.

7. Verfahren nach Anspruch 6, wobei die Bestimmung der Invarianten der ersten Verzerrungsmatrix eine Singulärwertzerlegung von mindestens einer der Matrizen aus der Gruppe von Matrizen aufweist, die Folgendes aufweist: die erste Verzerrungsmatrix, die normalisierte erste Verzerrungsmatrix, eine normalisierte Korrelationsmatrix der ersten Verzerrungsmatrix.

8. Verfahren nach einem der Ansprüche 6 oder 7, wobei die Bestimmung mindestens einer Abbildung eines physikalischen Parameters des heterogenen Mediums ferner die Bestimmung einer ersten breitbandigen Reflexionsmatrix, die durch das oder die ersten Aberrationsgesetze korrigiert ist, in der Beobachtungsbasis aufweist.

9. Verfahren nach Anspruch 8, ferner aufweisend:

- Bestimmung einer korrigierten Verzerrungsmatrix, die zwischen der Fokussierungsbasis und der Aberrationskorrekturbasis durch das elementweise Matrixprodukt der ersten korrigierten breitbandigen Reflexionsmatrix mit der phasenkonjugierten Matrix der Referenzreflexionsmatrix definiert ist.

10. Verfahren nach Anspruch 9, ferner aufweisend:

- Bestimmen der Invarianten in der Fokusbasis der korrigierten Verzerrungsmatrix, um mindestens einen zweiten Isoplanetismusbereich in der Fokusebene zu identifizieren;
- Bestimmen für jeden identifizierten zweiten Isoplanetismusbereich eine Abbildung eines zweiten Aberrationsgesetzes in der Korrekturbasis.

11. Verfahren nach einem der vorhergehenden Ansprüche, das außerdem Folgendes aufweist:

- einen Schritt zur Bestimmung, ausgehend von der experimentellen Reflexionsmatrix, mindestens einer zweiten breitbandigen Reflexionsmatrix ($\mathbf{R_{rr}}(\Delta\omega_2)$), die in einer Fokussierungsbasis am Eingang und am Ausgang definiert ist, in einem zweiten Spektralband ($\Delta\omega_2$), das sich von dem ersten Spektralband unterscheidet;
- einen Schritt zur Bestimmung mindestens einer zweiten Verzerrungsmatrix ($\mathbf{D_{\theta r}}(\Delta\omega_2)$, $\mathbf{D_{rr}}(\Delta\omega_2)$), die in dem zweiten Spektralband zwischen der Fokussierungsbasis und der Beobachtungsbasis definiert ist, wobei sich die zweite Verzerrungsmatrix direkt oder nach Änderung der Basis aus dem elementweisen Matrixprodukt der zweiten Breitbandreflexionsmatrix ($\mathbf{R_{\theta r}}(\Delta\omega_2)$), die zwischen der Fokussierungsbasis und der Aberrationskorrekturbasis definiert ist, mit der phasenkonjugierten Matrix einer Referenzreflexionsmatrix, die für ein Modellmedium definiert ist, zwischen denselben Basen ergibt.

12. Verfahren nach Anspruch 11, ferner aufweisend:

- Bestimmung der Invarianten in der Fokussierungsbasis der mindestens einen zweiten Verzerrungsmatrix ($\mathbf{D_{\theta r}}(\Delta\omega_2)$), um mindestens einen ersten Isoplanetismusbereich in der Fokusebene zu identifizieren ;
- Bestimmen für jeden identifizierten Isoplanetismusbereich eine Abbildung von mindestens einem ersten Aberrationsgesetz in der Korrekturbasis;
- Bestimmen in der Beobachtungsbasis mindestens eine zweite breitbandige Reflexionsmatrix, die durch das erste Aberrationsgesetz oder die ersten Aberrationsgesetze korrigiert wurde;
- Summieren der ersten korrigierten breitbandigen Reflexionsmatrix und der mindestens einen zweiten korrigierten breitbandigen Reflexionsmatrix, um eine korrigierte Ultrabreitband-Reflexionsmatrix zu bilden.

13. Verfahren nach einem der vorhergehenden Ansprüche, wobei die Bestimmung mindestens einer Abbildung eines physikalischen Parameters des heterogenen Mediums die Bestimmung der Schallgeschwindigkeit in der beschallten Zone aufweist.

14. Verfahren nach einem der vorhergehenden Ansprüche, wobei die Bestimmung mindestens einer Abbildung eines physikalischen Parameters des heterogenen Mediums die Bestimmung einer Mehrfachdiffusionsrate in der beschallten Zone aufweist.

15. Verfahren nach einem der vorhergehenden Ansprüche, ferner aufweisend die Identifizierung und/oder Unterdrückung von Spiegelreflexions- und/oder Mehrfachreflexionskomponenten aus der ersten Verzerrungsmatrix, ausgedrückt als Eingabe und Ausgabe in der ebenen Wellenbasis.

16. System (40) zur nichtinvasiven Ultraschallcharakterisierung eines heterogenen Mediums (20), aufweisend:

- Mindestens ein erstes Netzwerk (10) von Wandlern, die so konfiguriert ist, dass sie eine Reihe von Ultraschallwellen erzeugt, die in einen Bereich des heterogenen Mediums einfallen, und die Ultraschallwellen aufzeichnet, die von dem Bereich als Funktion der Zeit zurückgestreut werden;
- eine Recheneinheit (42), die mit dem mindestens einen ersten Wandlernetzwerk gekoppelt und so konfiguriert ist, dass sie:

- eine experimentelle Reflexionsmatrix ($\mathbf{R_{ui}}$(t)) zu speichern, die zwischen einer Sendebasis (i) am Eingang und der Basis der Wandler (u) am Ausgang definiert ist;
- Bestimmen, aus der experimentellen Reflexionsmatrix, mindestens eine erste breitbandige Reflexions-matrix ($\mathbf{R_{rr}}(\Delta\omega_1)$), die in einer Fokussierungsbasis am Eingang und am Ausgang in einem ersten gegebenen Spektralband ($\Delta\omega_1$) definiert ist;
- Bestimmen einer ersten Verzerrungsmatrix (Der, Drr), die in dem ersten Spektralband zwischen der Fokussierungsbasis und einer Beobachtungsbasis definiert ist, wobei die erste Verzerrungsmatrix direkt oder nach Änderung der Basis aus dem elementweisen Matrixprodukt der ersten breitbandigen Reflexi-onsmatrix ($\mathbf{R_{\theta r}}(\Delta\omega_1)$), die zwischen der Fokussierungsbasis und einer Aberrationskorrekturbasis definiert ist, mit der phasenkonjugierten Matrix einer Referenzreflexionsmatrix, die für ein Modellmedium definiert ist, zwischen denselben Basen resultiert;
- Bestimmen, aus der ersten Verzerrungsmatrix, mindestens eine Abbildung eines physikalischen Parameters des heterogenen Mediums.

## Claims

1. A method for the non-invasive ultrasound characterization of a heterogeneous medium, the method comprising:

   - a step of generating, by means of at least a first array of transducers, a series of incident ultrasound waves in a region of said heterogeneous medium;
   - a step of recording an experimental reflection matrix ($\mathbf{R_{ui}(t)}$) defined between an emission basis (i) at input and the transducer basis (u) at output;
   - a step of determining, on the basis of said experimental reflection matrix, at least a first wideband reflection matrix ($\mathbf{R_{rr}}(\Delta\omega_1)$), defined in a focused basis at input and at output, in a first spectral band ($\Delta\omega_1$);
   - a step of determining a first distortion matrix ($\mathbf{D_{\theta r}}$, $\mathbf{D_{rr}}$) defined in said first spectral band, between said focused basis and an observation basis, said first distortion matrix resulting, directly or after change of basis, from the term-by-term matrix product of said first wideband reflection matrix ($\mathbf{R_{\theta r}}(\Delta\omega_1)$), defined between said focused basis and an aberration correction basis, with the phase conjugate matrix of a reference reflection matrix, defined for a model medium, between the same bases;
   - a step of determining, on the basis of said first distortion matrix, at least one mapping of a physical parameter of said heterogeneous medium.

2. The method as claimed in claim 1, wherein the determination of said first wideband reflection matrix ($\mathbf{R_{rr}}(\Delta\omega_1)$) comprises:

   - a change of basis at input and at output, from said experimental reflection matrix expressed in the frequency domain ($\mathbf{R_{\theta u}}(\omega)$) to form a reflection matrix ($\mathbf{R_{rr}}(\omega)$), defined in the frequency domain, in a focused basis at input and at output;
   - a coherent summation on said first given spectral band ($\Delta\omega_1$) of said reflection matrix defined in a focused basis at input and at output to form said first wideband reflection matrix ($\mathbf{R_{rr}}(\Delta\omega_1)$) defined in a focused basis at input and at output.

3. The method as claimed in either one of the preceding claims, wherein the determination of said first distortion matrix comprises:

   - a change of basis, at input or at output, of said first wideband reflection matrix ($\mathbf{R_{rr}}$) defined in a focused basis at input and at output, to obtain said first wideband reflection matrix ($\mathbf{R_{\theta r}}$) determined between the focused basis and the aberration correction basis;
   - the term-by-term matrix product of said first wideband reflection matrix ($\mathbf{R_{\theta r}}$) defined between said focused basis and the aberration correction basis, with the phase conjugate matrix of the reference reflection matrix defined between the same bases.

4. The method as claimed in any one of the preceding claims, wherein:

   - said observation basis is the focused basis;
   - said first distortion matrix is defined in a focused basis at input and at output, and is obtained either directly from said first wideband reflection matrix ($\mathbf{R_{rr}}$) defined in a focused basis at input and at output, or by change of basis from the first distortion matrix defined between the focused basis and the aberration correction basis.

5. The method as claimed in claim 4, wherein the determination of at least one mapping of a physical parameter of said heterogeneous medium comprises determining, from said first distortion matrix defined in a focused basis at input and at output, and for at least one first isoplanatic domain identified, at least one first point spread function (PSF).

6. The method as claimed in any one of the preceding claims, wherein the determination of at least one mapping of a physical parameter of said heterogeneous medium comprises:

   - determining the invariants in said focused basis of said first distortion matrix, in order to identify at least one first isoplanatic domain in said focused basis;
   - determining, for each first isoplanatic domain identified, a mapping of at least one first aberration law in said aberration correction basis.

7. The method as claimed in claim 6, wherein the determination of the invariants of said first distortion matrix comprises a singular value decomposition of at least one of the matrices of the group of matrices comprising: said first distortion matrix, said first distortion matrix normalized, a normalized correlation matrix of said first distortion matrix.

8. The method as claimed in either one of claims 6 and 7, wherein the determination of at least one mapping of a physical parameter of said heterogeneous medium further comprises determining in said observation basis a first wideband reflection matrix corrected by said one or more first aberration laws.

9. The method as claimed in claim 8, further comprising:

   - determining a corrected distortion matrix, defined between said focused basis and said aberration correction basis by the term-by-term matrix product of said corrected first wideband reflection matrix with the phase conjugate matrix of said reference reflection matrix.

10. The method as claimed in claim 9, further comprising:

    - determining the invariants in said focused basis of said corrected distortion matrix, in order to identify at least one second isoplanatic domain in said focal plane;
    - determining, for each second isoplanatic domain identified, a mapping of a second aberration law in said correction basis.

11. The method as claimed in any one of the preceding claims, further comprising:

    - a step of determining, on the basis of said experimental reflection matrix, at least one second wideband reflection matrix ($\mathbf{R_{rr}}(\Delta\omega_2)$), defined in a focused basis at input and at output, in a second spectral band ($\Delta\omega_2$) different from said first spectral band;
    - a step of determining at least one second distortion matrix ($\mathbf{D_{\theta r}}(\Delta\omega_2)$, $\mathbf{D_{rr}}(\Delta\omega_2)$) defined in said second spectral band between said focused basis and said observation basis, said second distortion matrix resulting, directly or after change of basis, from the term-by-term matrix product of said second wideband reflection matrix ($\mathbf{R_{\theta r}}(\Delta\omega_2)$), defined between said focused basis and said aberration correction basis, with the phase conjugate matrix of a reference reflection matrix, defined for a model medium, between the same bases.

12. The method as claimed in claim 11, further comprising:

    - determining the invariants in said focus basis of said at least one second distortion matrix ($\mathbf{D_{\theta r}}(\Delta\omega_2)$, in order to identify at least one first isoplanatic domain in said focal plane;
    - determining, for each isoplanatic domain identified, a mapping of at least one first aberration law in said correction basis;
    - determining, in said observation basis, at least one second wideband reflection matrix corrected by said one or more first aberration laws;
- summing said corrected first wideband reflection matrix and said corrected at least one second wideband reflection matrix to form an ultra-wideband corrected reflection matrix.

13. The method as claimed in any one of the preceding claims, wherein the determination of at least one mapping of a physical parameter of said heterogeneous medium comprises determining the speed of sound in the insonified region.

14. The method as claimed in any one of the preceding claims, wherein the determination of at least one mapping of a physical parameter of said heterogeneous medium comprises determining a multiple scattering rate in the insonified region.

15. The method as claimed in any one of the preceding claims, further comprising the identification and/or elimination of the specular reflection and/or multiple reflection components on the basis of said first distortion matrix, which is expressed at input and at output in the plane wave basis.

16. A system (40) for the non-invasive ultrasound characterization of a heterogeneous medium (20) comprising:

- At least one first array (10) of transducers that is configured to generate a series of incident ultrasound waves in a region of said heterogeneous medium and to record the ultrasound waves backscattered by said region as a function of time;
- a computing unit (42), coupled to said at least one first array of transducers, and configured to:

   o record an experimental reflection matrix ($\mathbf{R}_{ui}$(t)) defined between an emission basis (i) at input and the transducer basis (u) at output;
   o determine, on the basis of said experimental reflection matrix, at least one first wideband reflection matrix ($\mathbf{R}_{rr}(\Delta\omega_1)$), defined in a focused basis at input and at output, in a first given spectral band ($\Delta\omega_1$);
   o determine a first distortion matrix ($\mathbf{D}_{\theta r}$, $\mathbf{D}_{rr}$) defined in said first spectral band, between said focused basis and an observation basis, said first distortion matrix resulting, directly or after change of basis, from the term-by-term matrix product of said first wideband reflection matrix ($\mathbf{R}_{\theta r}(\Delta\omega_1)$), defined between said focused basis and an aberration correction basis, with the phase conjugate matrix of a reference reflection matrix, defined for a model medium, between the same bases;
   o determine, on the basis of said first distortion matrix, at least one mapping of a physical parameter of said heterogeneous medium.

FIG.1A (ART ANTERIEUR)

28

FIG.1B (ART ANTERIEUR)

FIG.1C (ART ANTERIEUR)

FIG.2 (ART ANTERIEUR)

FIG.3A (ART ANTERIEUR)    FIG.3B (ART ANTERIEUR)

FIG.4

**FIG.5**

FIG.6

FIG.7A

EP 3 824 280 B1

$$\arg\{D(\theta_{out}, r_{in})\} = \arg\{R(\theta_{out}, r_{in})\} - \arg\{G'_0(\theta_{out}, r_{in})\}$$

Distorsion      Front d'onde aberré      Composante géométrique (diffraction)

# FIG.7B

FIG.8

Matrices Distortion - "plan focal"
$D(r'_{out}, r_{in}) - z = 25$ mm

EP 3 824 280 B1

Valeurs singulières normalisées

FIG.9A

Arg(V$_1$)

FIG.9B

EP 3 824 280 B1

Image US sans correction — 101

Image US corrigée — 103

Matrices Distortion - "plan focal"
$D(r'_{out}, r_{in})$ $z = 42$ mm — 102

Fonction d'étalement

FIG.10

EP 3 824 280 B1

FIG.11

EP 3 824 280 B1

FIG.12A

FIG.12B

FIG.12C

Image US
c = 1800 m/s
122

Image filtrée
123

Matrice Distortion
Base Focale
D(r'_out, r_in)
124

Matrice Distortion
Base Ondes Planes
D(θ_out, θ'_in)
125

Avant filtrage

Après filtrage
127

126

$\theta'_{in} = \theta_{in} + \theta_{out}$ (deg)

$\theta_{out} = -\theta_{in}$

EP 3 824 280 B1

FIG.13

EP 3 824 280 B1

141

Image US
c = 1540 m/s

142

Image US filtrée et corrigée

143

Profil de la vitesse du son intégré
sur la profondeur

FIG.14

EP 3 824 280 B1

FIG.15

Image US
c = 1540 m/s 151

$\rho_{MS}(r)$ 155

D(r'$_{out}$,r$_{in}$) z = 75 mm

153

$I_S(r) + 2I_M(r)$

$I_M(r)$ 154

152

Temps (t)

r
Plan focal

r$_{in}$     r$_{out}$

$\delta r$

EP 3 824 280 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. MONTALDO et al.** Coherent plane-wave compounding for very high frame rate ultrasonography and transient elastography. *IEEE Trans. Ultrason., Ferroelect. Freq. Control,* 2009, vol. 56, 489-506
- **D. J. PHILIPS ; S. W. SMITH ; O. T. VON RAMM ; F. L. THURSTONE.** A phase compensation technique for B-Mode echoencephalography. *Ultrasound in Medicine,* 1975, vol. 1, 345-404
- **M. O'DONNELL ; S. W. FLAX.** Phase aberration measurements in medical ultrasound: Human studies. *Ultrasonic Imaging,* 1988, vol. 10, 1-11
- **L. NOCK ; G. E. TRAHEY ; S. W. SMITH.** Phase aberration correction in médical ultrasound using speckle brightness as a quality factor. *J. Acoust. Soc. Am,* 1989, vol. 85 (5), 1819-1833

- **C. PRADA ; M. FINK.** Eigenmodes of the time reversai operator. *Wave Motion,* 1994, vol. 20, 151-163
- **M. TANTER ; J.-L. THOMAS ; M. FINK.** Time reversai and the inverse filter. *J. Acoust. Soc. Am.,* 2000, vol. 108, 223-234
- **J-L. ROBERT et al.** Green's function estimation in speckle using the décomposition of the time reversal operator: Application to aberration correction in medical imaging. *J. Acoust. Soc. Am.,* 2008, vol. 123, 2
- **A. AUBRY et al.** *Appl. Phys. Lett.,* 2008, vol. 92, 124101
- **A. AUBRY et al.** *J. Acous. Soc. Am.,* 2011, vol. 129, 225-233